(19) Europäisches Patentamt
European Patent Office
Office européen des brevets

(11) **EP 2 816 371 B1**

(12) **EUROPEAN PATENT SPECIFICATION**

(45) Date of publication and mention
of the grant of the patent:
**12.10.2016 Bulletin 2016/41**

(51) Int Cl.:
*G01S 13/90* (2006.01)  *G05D 1/08* (2006.01)

(21) Application number: **14169567.6**

(22) Date of filing: **23.05.2014**

(54) **Method and device for steering attitude of satellite carrying synthetic aperture radar**

Verfahren und Vorrichtung zur Steuerung der Lage eines Satelliten mit einem Radar mit synthetischer Apertur

Procédé et dispositif de commande d'attitude d'un satellite avec radar à ouverture synthétique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2013  CN 201310687784**

(43) Date of publication of application:
**24.12.2014 Bulletin 2014/52**

(73) Proprietor: **Institute of Electronics, Chinese Academy of Sciences**
**Beijing 100190 (CN)**

(72) Inventors:
• **Deng, Yunkai**
**100190 Beijing (CN)**
• **Zhao, Shuo**
**100190 Beijing (CN)**
• **Wang, Yu**
**100190 Beijing (CN)**
• **Zhang, Zhimin**
**100190 Beijing (CN)**
• **Zhao, Fengjun**
**100190 Beijing (CN)**
• **Wang, Chunle**
**100190 Beijing (CN)**
• **Liu, Yue**
**100190 Beijing (CN)**
• **Liu, Yabo**
**100190 Beijing (CN)**

(74) Representative: **Gulde & Partner**
**Patent- und Rechtsanwaltskanzlei mbB**
**Wallstraße 58/59**
**10179 Berlin (DE)**

(56) References cited:
**EP-A1- 1 515 159**

• YU ZE ET AL: "A NEW SATELLITE ATTITUDE STEERING APPROACH FOR ZERO DOPPLER CENTROID", 2009 IET INTERNATIONAL RADAR CONFERENCE,, 22 April 2009 (2009-04-22), XP055153366, ISSN: 0537-9989 ISBN: 978-1-84-919010-7
• TENG LONG ET AL: "A New Method of Zero-Doppler Centroid Control in GEO SAR", IEEE GEOSCIENCE AND REMOTE SENSING LETTERS, IEEE SERVICE CENTER, NEW YORK, NY, US, vol. 8, no. 3, 1 May 2011 (2011-05-01), pages 512-516, XP011354719, ISSN: 1545-598X, DOI: 10.1109/LGRS.2010.2089969
• GORDON W DAVIDSON ET AL: "Signal Properties of Spaceborne Squint-Mode SAR", IEEE TRANSACTIONS ON GEOSCIENCE AND REMOTE SENSING, IEEE SERVICE CENTER, PISCATAWAY, NJ, US, vol. 35, no. 3, 1 May 1997 (1997-05-01), XP011020851, ISSN: 0196-2892
• CHANG C Y ET AL: "Attitude Steering For Space Shuttle Based Synthetic Aperture Radars", INTERNATIONAL SPACE YEAR : SPACE REMOTE SENSING. HOUSTON, MAY 26 - 29, 1992; [PROCEEDINGS OF THE INTERNATIONAL GEOSCIENCE AND REMOTE SENSING SYMPOSIUM (IGARSS)], NEW YORK, IEE, US, vol. SYMP. 12, 26 May 1992 (1992-05-26), pages 297-301, XP010101054, ISBN: 978-0-7803-0138-2

- RUNGE H: "Benefits Of Antenna Yaw Steering For SAR", GEOSCIENCE AND REMOTE SENSING SYMPOSIUM, 1991. IGARSS '91. REMOTE SENSING: GLOBAL MONITORING FOR EARTH MANAGEMENT., INTERNATIONAL JUNE 3-6, 1991, NEW YORK, NY, USA,IEEE, US, vol. I, 3 June 1991 (1991-06-03), pages 257-261, XP010040985, ISBN: 978-0-87942-675-0

## Description

### TECHNICAL FIELD

The present disclosure relates to a satellite attitude steering technology, particularly to a method and device for steering an attitude of a satellite carrying a Synthetic Aperture Radar (SAR).

### BACKGROUND

A satellite attitude steering method is a key technology for reducing a Doppler center frequency of echo data of a spaceborne SAR. A satellite attitude steering method reduces the Doppler center frequency of the SAR echo data to around 0 Hertz by adjusting a yaw angle and a pitch angle of a satellite, and thereby reducing focus algorithm complexity, improving image registration precision and interference precision, and facilitating scallop effect correction. At present, satellite attitude steering technologies have been applied and verified in international advanced SAR systems (e.g. TerraSAR-X system).

Existing satellite attitude steering methods include: a one-dimensional attitude steering method for a circular orbit, i.e. a Doppler center frequency is reduced by adjusting a yaw angle under an assumption of a perfectly circular orbit; a two-dimensional attitude steering method for an oval orbit, i.e. a Doppler center frequency is reduced by adjusting a yaw angle and a pitch angle at the same time. Since an oval orbit model is closer to an actual satellite orbit, the one-dimensional steering method proposed for a circular orbit will generate several hundred Hertz of a residual Doppler center frequency in an actual low-orbit nearly-circular orbit SAR system, while the two-dimensional steering method proposed for an oval orbit can effectively reduce a Doppler center frequency while increasing the complexity of a satellite attitude control system. In addition, some SAR systems require a certain coordinate axis of a satellite coordinate system to be vertical to the ground surface, which means that a pitch angle is restricted. Therefore, the existing two-dimensional attitude steering method is not applicable any more.

Yu Ze et al.: "A new satellite attitude steering approach for zero Doppler centroid" (2009 IET International Radar Conference, 22 April 2009) proposes a new satellite attitude steering approach to perform yaw and pitch steering for SAR satellites to enable the Doppler centroid to be total zero. Based on the basic methodology of the SAR satellite attitude steering, the desired yaw angle and the pitch angle are derived. And comparisons with the attitude steering technique currently applied are presented. Simulation and analysis show that this method can obtain better results.

Teng Long et al.: "A New Method of Zero-Doppler Centroid Control in GEO SAR" (IEEE Geoscience and Remote Sensing Letters, IEEE Service Center, New York, NY, US, vol. 8, no. 3, 1 May 2011, pages 512-516) primarily analyzes the Doppler properties of the GEO SAR in the satellite local coordinate systems, and gives the calculation formulas of the Doppler centroid frequency and instantaneous Doppler bandwidth. Based on the vector analysis, a new calculation method is proposed for the 2-D attitude steering angles in GEO SAR. The new method, considering Earth's rotation and elliptical orbit effects, can accurately compensate the Doppler centroid to zero. Then, according to the 2-D attitude steering angles and the characteristics of GEO SAR, the 2-D phase scan method is put forward to carry out the highly accurate compensation of Doppler centroid, which can avoid the difficulty of rotating and stabilizing the GEO SAR system. The simulations validate the conclusion in this letter.

EP1515159A1 discloses a method for reducing the doppler centroid for coherent pulsed radar system, which provides reduction of the Doppler centroid and/or its variation by use of a yaw angle control, with combined control of the pitch angle, for reducing the Doppler centroid and/or its variation to a minimum over the full width of the ground strip scanned by the radar antenna of the synthetic aperture radar system.

### SUMMARY

The present disclosure provides a method and device for steering an attitude of a satellite carrying a SAR, which can reduce a Doppler center frequency of SAR echo data in the case of a zero pitch angle in accordance with claims 1 and 3 or a specific pitch angle in accordance with claims 2 and 4.

### BRIEF DESCRIPTION OF THE DRAWINGS

Fig. 1 is a flowchart of a method for steering an attitude of a satellite carrying a SAR of an embodiment of the present disclosure;
Fig. 2 is a schematic diagram illustrating an SAR geometric model in an embodiment of the present disclosure;
Fig. 3 is a schematic diagram illustrating changes of a Doppler center frequency located in the center of a swath within an orbit period when using the method in an embodiment of the present disclosure and a TerraSAR-X method;
Fig. 4 is a schematic diagram illustrating changes of a Doppler center frequency located close to a swath within an orbit period when using the method in an embodiment of the present disclosure and a TerraSAR-X method;
Fig. 5 is a is a schematic diagram illustrating changes of a Doppler center frequency located away from a swath within an orbit period when using the method in an embodiment of the present disclosure and a TerraSAR-X method; and
Fig. 6 is a structural diagram illustrating components of a device for steering an attitude of a satellite carrying a SAR of an embodiment of the present disclosure.

**DETAILED DESCRIPTION**

The present disclosure will be further described in details below in combination with the accompanying drawings and specific embodiments.

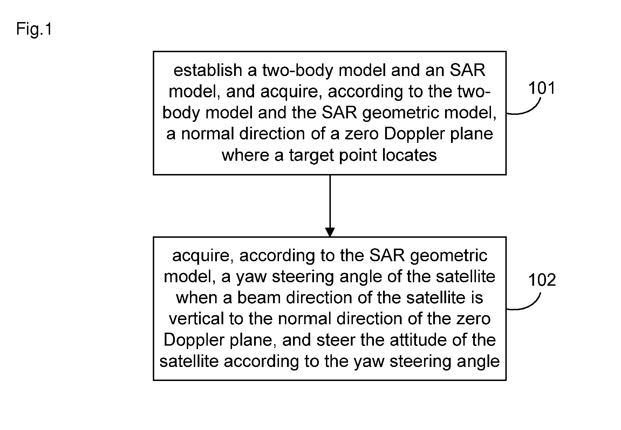

Fig. 1 is a flowchart of a method for steering an attitude of a satellite carrying a SAR of an embodiment of the present disclosure, as shown in Fig. 1, including the following steps:

Step 101: establish a two-body model and an SAR geometric model, and acquire, according to the two-body model and the SAR geometric model, a normal direction of a zero Doppler plane where a target point locates;
in the present embodiment, the two-body model is a geometric model formed of a satellite and a target star surrounded by the satellite;
specifically, in the two-body model, a Doppler frequency of a target point on the surface of the target star may be expressed by Formula (1):

$$f_{Dop} = -\frac{2}{\lambda} \frac{\left(\vec{R}_S - \vec{R}_T\right) \bullet \left(\dot{\vec{R}}_S - \dot{\vec{R}}_T\right)}{R}$$

$$(1)$$

in Formula (1), $\lambda$ is a carrier wavelength; $\vec{R}_S$ and $\vec{R}_T$ are position vectors of the satellite and the target star, respectively; $\dot{\vec{R}}_S$ and $\dot{\vec{R}}_T$ are first-order derivatives of the position vectors of the satellite and the target star, respectively; R is the distance between the satellite and the target point on the surface of the target star;

Let Formula (1)=0, i.e. $f_{Dop}$ =0, acquire, according to a relation $\vec{R}_T \bullet \dot{\vec{R}}_T = 0$ of a circular motion, an expression of the zero Doppler plane, expressed by Formula (2):

$$\vec{R}_S \bullet \dot{\vec{R}}_T + \dot{\vec{R}}_S \bullet \vec{R}_T = \vec{R}_S \bullet \dot{\vec{R}}_S \qquad (2)$$

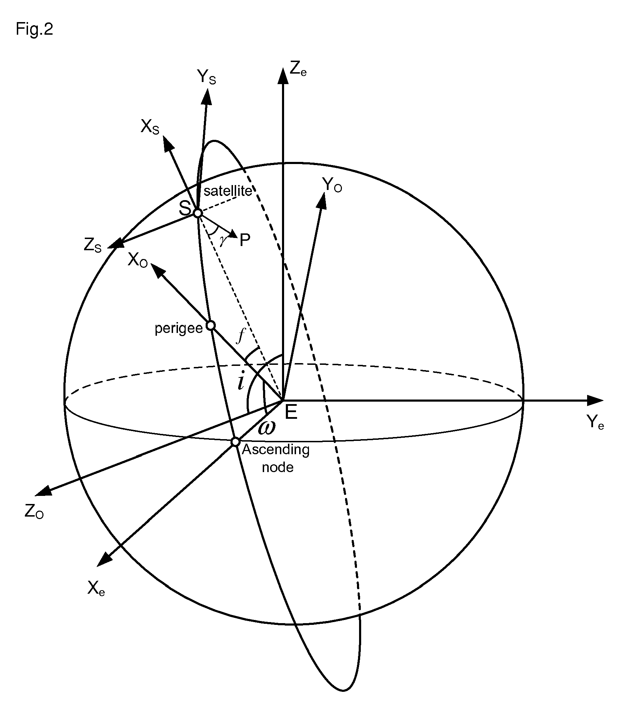

establish the SAR geometric model, Fig. 2 is a schematic diagram illustrating an SAR geometric model in an embodiment of the present disclosure. As shown in Fig. 2, the SAR geometric model includes three coordinate systems: an earth-centered inertial coordinate system, an orbit plane coordinate system and a satellite platform coordinate system, wherein in the earth-centered inertial coordinate system E-$X_e Y_e Z_e$, the origin of coordinates E is overlapped with the earth core; the $Z_e$ axis points to an earth angular momentum direction; the $X_e$ axis points to an orbit ascending node; the $Y_e$ axis and the $X_e$ axis constitute an equatorial plane; and the $Y_e$ axis, the $X_e$ axis and the $Z_e$ axis form a right hand orthogonal system;
in the orbit plane coordinate system E-$X_o Y_o Z_o$, the origin of coordinates E is overlapped with the earth core; the $Z_o$ axis points to a satellite angular momentum direction; the $X_o$ axis points to an orbit perigee; the $Y_o$ axis and the $X_o$ axis form an orbit plane; and the $Y_o$ axis, the $X_o$ axis and the $Z_o$ axis form a right hand orthogonal system;
in the satellite platform coordinate system S-$X_s Y_s Z_s$, the origin of coordinates S is overlapped with the satellite center of mass; the $Z_s$ axis points to a satellite angular momentum direction; the $X_s$ axis points from the earth core to the satellite center of mass; the $Y_s$ axis and the $X_s$ axis form an orbit plane; and the $Y_s$ axis, the $X_s$ axis and the $Z_s$ axis form a right hand orthogonal system;
in Fig. 2, *i* is an intersection angle of $Z_e E Z_o$, which is an orbit inclination; $\omega$ is an intersection angle of $X_o E X_e$, which is a

perigee argument; $f$ is an intersection angle of $X_oEX_s$, which is a true mesial angle; SP is a beam central visual ray of a satellite radar antenna; and $\gamma$ is an intersection angle of PSE, which is an angle of incidence;

a rotation matrix from the orbit plane coordinate system E-$X_oY_oZ_o$ to the earth-centered inertial coordinate system E-$X_eY_eZ_e$ satisfies Formula (3):

$$A_{eo} = \begin{bmatrix} 1 & 0 & 0 \\ 0 & \cos i & -\sin i \\ 0 & \sin i & \cos i \end{bmatrix} \begin{bmatrix} \cos \omega & -\sin \omega & 0 \\ \sin \omega & \cos \omega & 0 \\ 0 & 0 & 1 \end{bmatrix} \quad (3)$$

in Formula (3), $i$ is an orbit inclination and $\omega$ is a perigee argument; under the orbit plane coordinate system E-$X_oY_oZ_o$, a position vector $\vec{R}'_S$ and a velocity vector $\dot{\vec{R}}'_S$ of the satellite are Formula (4) and Formula (5), respectively:

$$\vec{R}'_S = \frac{a(1-e^2)}{1+e\cos f} \left[\cos f, \sin f, 0\right]^T \quad (4)$$

$$\dot{\vec{R}}'_S = \sqrt{\frac{\mu}{a(1-e^2)}} \left[-\sin f, \cos f + e, 0\right]^T \quad (5)$$

in Formula (4) and Formula (5), $a$ is an orbit semi-major axis under the orbit plane coordinate system; $e$ is an orbit eccentricity under the orbit plane coordinate system; $f$ is a true mesial angle and $\mu$ is a gravitational attraction constant;

under the earth-centered inertial coordinate system E-$X_eY_eZ_e$, a position vector $\vec{R}_T$ and a velocity vector $\dot{\vec{R}}_T$ of the target point on the surface of the target star are Formula (6) and Formula (7), respectively:

$$\vec{R}_T = \begin{bmatrix} x_T \\ y_T \\ z_T \end{bmatrix} \quad (6)$$

$$\dot{\vec{R}}_T = \omega_e \begin{bmatrix} -y_T \\ x_T \\ 0 \end{bmatrix} = \omega_e \begin{bmatrix} 0 & -1 & 0 \\ 1 & 0 & 0 \\ 0 & 0 & 0 \end{bmatrix} \begin{bmatrix} x_T \\ y_T \\ z_T \end{bmatrix} \quad (7)$$

in Formula (6) and Formula (7), $x_T$, $y_T$ and $z_T$ are components of the position vector $\vec{R}_T$ along the $X_e$ axis, the $Y_e$ axis and the $Z_e$ axis, respectively; $\omega_e$ is the angular velocity of earth rotation; $\omega_e$ may be denoted by $A_c$ and $A_c$ satisfies Formula (8):

$$A_c = \begin{bmatrix} 0 & -1 & 0 \\ 1 & 0 & 0 \\ 0 & 0 & 0 \end{bmatrix} \quad (8)$$

$\vec{R}_S = A_{eo}\vec{R}_S'$ and $\dot{\vec{R}}_S = A_{eo}\dot{\vec{R}}_S'$ are rotated by coordinates; the inner product in Formula (2) is expressed by matrix multiplication and Formula (2) is converted into Formula (9):

$$\vec{R}_S \; \dot{\vec{R}}_S = \left[ \omega_e \vec{R}_S'^T A_{eo}^T A_c + \dot{\vec{R}}_S'^T A_{eo}^T \right] \vec{R}_T \qquad (9)$$

since the above formula is related to a plane equation of $\overline{R}_T = [x_T, y_T, z_T]^T$, a normal vector of the zero Doppler plane where the target point locates is expressed by Formula (10):

$$\vec{n} = \left[ \omega_e \vec{R}_S'^T A_{eo}^T A_c + \dot{\vec{R}}_S'^T A_{eo}^T \right]^T \qquad (10)$$

Step 102: acquire, according to the SAR geometric model, a yaw steering angle of the satellite when a beam direction of the satellite is vertical to the normal direction of the zero Doppler plane, and steer the attitude of the satellite according to the yaw steering angle.

In the present embodiment, the following two situations may be included: a pitch angle of the satellite may be zero, or the pitch angle of the satellite may be a preset angle. In these two situations, when the beam direction of the satellite is vertical to the normal direction of the zero Doppler plane, the yaw steering angle of the satellite is obtained and the attitude of the satellite is steered according to the yaw steering angle.

Specifically, when the pitch angle of the satellite is zero, in the satellite platform coordinate system S-$X_sY_sZ_s$, a beam central visual ray of the satellite radar antenna is the beam direction, and a unit vector of the beam direction satisfies the Formula (11) under zero attitude steering:

$$\vec{l} = \left[ -\cos\gamma, 0, \varepsilon\sin\gamma \right]^T \qquad (11)$$

In Formula (11), $\gamma$ is an incidence angle, $\varepsilon$ is a left or right visual identifier; when the radar antenna is in right visibility, $\varepsilon = -1$; and when the radar antenna is in left visibility, $\varepsilon = +1$.

When the yaw steering angle and the pitch angle are $\theta_y$ and $\theta_p$, respectively, after the attitude is steered, a beam direction vector satisfies Formula (12):

$$\vec{l}' = A_{sa}\vec{l} \qquad (12)$$

In Formula (12), a rotation matrix $A_{sa}$ satisfies Formula (13):

$$A_{sa} = \begin{bmatrix} 1 & 0 & 0 \\ 0 & \cos\theta_y & -\sin\theta_y \\ 0 & \sin\theta_y & \cos\theta_y \end{bmatrix} \begin{bmatrix} \cos\theta_p & -\sin\theta_p & 0 \\ \sin\theta_p & \cos\theta_p & 0 \\ 0 & 0 & 1 \end{bmatrix} \qquad (13)$$

A rotation matrix from the satellite platform coordinate system S-$X_sY_sZ_s$ to the orbit plane coordinate system E-$X_oY_oZ_o$ satisfies Formula (14):

$$A_{os} = \begin{bmatrix} \cos f & -\sin f & 0 \\ \sin f & \cos f & 0 \\ 0 & 0 & 1 \end{bmatrix} \qquad (14)$$

In Formula (14), *f* is a true mesial angle. Under the earth-centered inertial coordinate system E-$X_e Y_e Z_e$, a beam direction vector satisfies Formula (15):

$$\vec{l}' = A_{eo} A_{os} A_{sa} \vec{l} \quad (15)$$

According to Formula (10) and Formula (15), the inner product of the normal vector $\vec{n}$ of the zero Doppler plane and the beam direction vector $\vec{l}'$ is expressed by Formula (16):

$$\vec{n} \cdot \vec{l}' = \left[ \omega_e \vec{R}_S'^T A_{eo}^T A_c + \dot{\vec{R}}_S'^T A_{eo}^T \right] A_{eo} A_{os} A_{sa} \vec{l} \quad (16)$$

Let the pitch angle $\theta p = 0$ and let Formula (16) equal to zero at the same time. According to Formula (13) and Formula (16), when the pitch angle is zero and the beam direction of the satellite is vertical to the normal direction of the zero Doppler plane, the yaw steering angle $\theta_y$ satisfies Formula (17):

$$\theta_y = \sin^{-1}(\varepsilon \tan \theta_{po} \cot \gamma) + \theta_{yo} \quad (17)$$

The attitude of the satellite is steered according to the yaw steering angle $\theta_y$ obtained in Formula (17).
In Formula (17) $\theta_{yo}$ and $\theta_{po}$ are parameters provided to simplify the expression and do not have other physical meanings; $\theta_{yo}$ and $\theta_{po}$ respectively satisfy Formula (18) and Formula (19):

$$\theta_{yo} = \tan^{-1}\left(\frac{k_1 \sin i \cos(\omega + f)}{k_2(1 + e\cos f) - k_1 \cos i}\right) \quad (18)$$

$$\theta_{po} = k \tan^{-1}\left(\frac{ek_2 \sin f}{\sqrt{[k_1 \sin i \cos(\omega + f)]^2 + [k_2(1 + e\cos f) - k_1 \cos i]^2}}\right) \quad (19)$$

In Formula (18) and Formula (19), $k_1$, $k_2$ and $k$ respectively satisfy Formula (20) to Formula (22):

$$k_1 = \omega_e \frac{a(1 - e^2)}{1 + e\cos f} \quad (20)$$

$$k_2 = \sqrt{\frac{\mu}{a(1 - e^2)}} \quad (21)$$

$$k = \begin{cases} -1 & k_2(1 + e\cos f) - k_1 \cos i \geq 0 \\ 1 & k_2(1 + e\cos f) - k_1 \cos i < 0 \end{cases} \quad (22)$$

In Formula (20) to Formula (22), $\omega_e$ is the angular velocity of earth rotation; *a* is an orbit semi-major axis under the orbit plane coordinate system; *e* is an orbit eccentricity under the orbit plane coordinate system; *f* is a true mesial

angle, $\mu$ is a gravitational attraction constant; and *i* is an orbit inclination under the orbit plane coordinate system.

Specifically, when the pitch angle of the satellite is a preset angle, in the satellite platform coordinate system S-$X_sY_sZ_s$, the pitch angle $\theta p$ in Formula (13) is a fixed value. Using the trigonometric identity and according to Formula (16), the yaw steering angle $\theta_y$ satisfies Formula (23) in the scenario of a non-zero pitch angle:

$$\theta_y = \sin^{-1}\left[\frac{\varepsilon \tan\theta_{po}\cot\gamma\cos\theta_p}{\sqrt{1+\sin^2\theta_p\cot^2\gamma}}\right]+\theta_{yo}-\theta \qquad (23)$$

In Formula (23), $\varepsilon$ is a left or right visual identifier; when the radar antenna is in right visibility, $\varepsilon$ = -1; and when the radar antenna is in left visibility, $\varepsilon$ =+1; $\gamma$ is a incidence angle and $\theta$ satisfies Formula (24):

$$\theta = \tan^{-1}(\varepsilon\sin\theta_p\cot\gamma) \qquad (24)$$

$\theta_{po}$ and $\theta_{yo}$ are expressed by Formula (18) and Formula (19).

The present disclosure will be further described in details below in combination with specific embodiments.

Table 1 illustrates parameters of an orbit and parameters of a radar system. This is a group of typical parameters of a low-orbit solar synchronous orbit. Such an orbit may be also an orbit applied by an existing SAR system.

Table 1

| Orbit parameter | Value | Orbit parameter | Value |
|---|---|---|---|
| Orbit semi-major axis | 6892.137km | Eccentricity | 0.0011 |
| Orbit inclination | 97.42° | Perigee argument | 90° |
| Carrier | 9.6GHz | Downwards angle of visibility | 30° |
| Beam width angle | 2° | | |

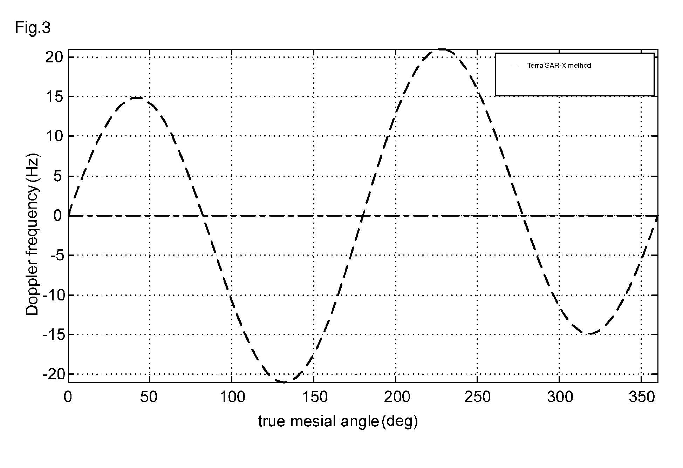

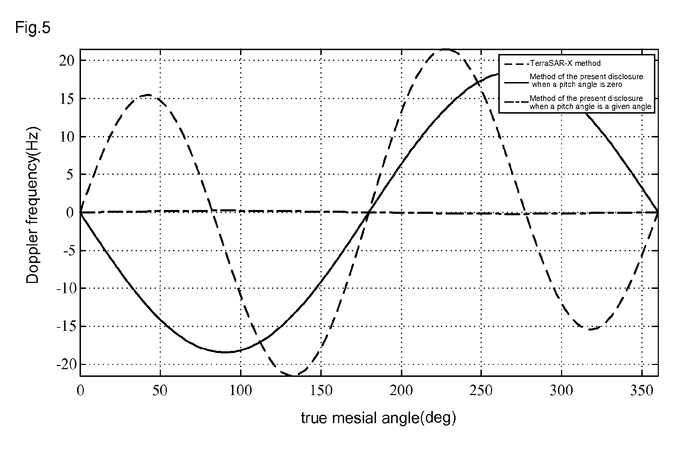

In the scenario of the orbit parameters and radar system parameters as illustrated in Table 1, Fig. 3 is a schematic diagram illustrating changes of a Doppler center frequency located in the center of a swath within an orbit period when using the method in an embodiment of the present disclosure and a TerraSAR-X method; Fig. 4 is a schematic diagram illustrating changes of a Doppler center frequency located close to a swath within an orbit period when using the method in an embodiment of the present disclosure and a TerraSAR-X method and Fig. 5 is a is a schematic diagram illustrating changes of a Doppler center frequency located away from a swath within an orbit period when using the method in an embodiment of the present disclosure and a TerraSAR-X method, wherein a given pitch angle is a pitch angle calculated by a TerraSAR-X method. To clearly observe the beneficial effect of a method of an embodiment of the present disclosure, the range of residual Doppler frequencies at different locations of a swath is as shown in Table 2:

Table 2

| | TerraSAR-X method | Method of the present disclosure when the pitch angle is zero | Method of the present disclosure when the pitch angle is a given angle |
|---|---|---|---|
| Doppler center frequency in the center of the swath | ±21.0Hz | ~0Hz | ~0Hz |
| Doppler center frequency close to the swath | ±20.5Hz | ± 18.4Hz | ±0.2Hz |
| Doppler center frequency away from the swath | ±21.5Hz | ± 18.4Hz | ±0.2Hz |

As shown in Table 2, in the center of the swath, the method of the present disclosure can effectively reduces the Doppler center frequency to 0Hz. Through the method proposed by the present disclosure, the residual Doppler frequency does not exceed 20Hz close to or away from the swath. The method of the present disclosure effectively reduces the Doppler center frequency with an effect better than the TerraSAR-X method.

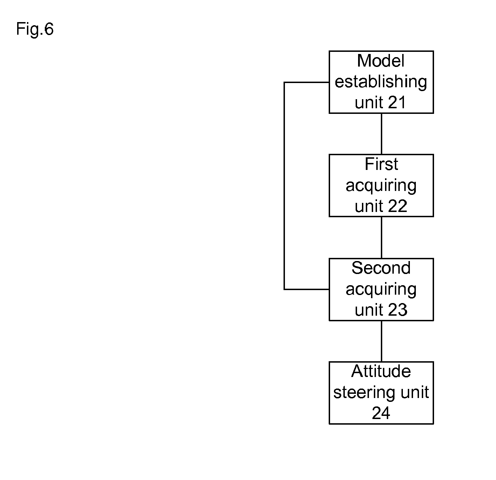

Fig. 6 is a structural diagram illustrating a structure of a device for steering an attitude of a satellite carrying an SAR according to an embodiment of the present disclosure. As shown in Fig. 6, the device includes: a model establishing unit 21, a first acquiring unit 22, a second acquiring unit 23 and an attitude steering unit 24, wherein

the model establishing unit 21 is configured to establish a two-body model and an SAR geometric model;

the first acquiring unit 22 is configured to acquire, according to the two-body model and the SAR geometric model, a normal direction of a zero Doppler plane where the satellite locates;

the second acquiring unit 23 is configured to acquire, according to the SAR geometric model, a yaw steering angle of the satellite when a beam direction of the satellite is vertical to the normal direction of the zero Doppler plane and send the yaw steering angle to the attitude steering unit;

the attitude steering unit 24 is configured to steer, according to the yaw steering angle sent by the second acquiring unit 23, the attitude of the satellite.

Preferably, the second acquiring unit 23 is configured to acquire, according to the SAR geometric model, the yaw steering angle of the satellite when a pitch angle of the satellite is zero and when the beam direction of the satellite is vertical to the normal direction of the zero Doppler plane; or acquire the yaw steering angle of the satellite when the pitch angle of the satellite is a preset angle and the beam direction of the satellite is vertical to the normal direction of the zero Doppler plane.

Preferably, the second acquiring unit 23 is specifically configured to acquire, through coordinate transformations among a satellite platform coordinate system, an orbit plane coordinate system and an earth-centered inertial coordinate system, a unit vector of the beam direction of the satellite under the earth-centered inertial coordinate system when the pitch angle is zero; and acquire the yaw steering angle of the satellite when the inner product of the unit vector of the beam direction of the satellite and the normal direction of the zero Doppler plane is zero.

Preferably, the second acquiring unit 23 is configured to acquire, through coordinate transformations among a satellite platform coordinate system, an orbit plane coordinate system and an earth-centered inertial coordinate system, a unit vector of the beam direction of the satellite under the earth-centered inertial coordinate system when the pitch angle is a preset angle; and acquire the yaw steering angle of the satellite when the inner product of the unit vector of the beam direction of the satellite and the normal direction of the zero Doppler plane is zero.

Preferably, the first acquiring unit 22 is specifically configured to acquire, according to the two-body model, a Doppler frequency of the target point; the Doppler frequency is represented by the following parameters: position vectors and velocity vectors of the satellite and the target point; when the Doppler frequency is zero, acquire, through coordinate transformations among a satellite platform coordinate system, an orbit plane coordinate system and an earth-centered inertial coordinate system, a normal direction of a plane where the satellite locates under the earth-centered inertial coordinate system.

Those skilled in the art would appreciated that functions of each processing unit in a device for steering an attitude of a satellite carrying a SAR according to the present disclosure may be understood with reference to related description of the method for steering an attitude of a satellite carrying an SAR. Each processing unit in the device for steering an attitude of a satellite carrying a SAR according to the present disclosure may be implemented by an analog circuit for implementing functions of the embodiments of the present disclosure, or may also be implemented by software running on an intelligent terminal for executing the functions according to the embodiments of the present disclosure.

In practical applications, the model establishing unit 21, the first acquiring unit 22, the second acquiring unit 23 and the attitude steering unit 24 in the device for steering an attitude of a satellite carrying an SAR may be implemented by a Central Processing Unit (CPU), a Digital Signal Processor (DSP) or a Field-Programmable Gate Array (FPGA) in the device.

In the embodiments provided by the present disclosure, it should be appreciated that the disclosed method and device may be implemented in other ways. The described device embodiments are merely exemplary. For example, the units provided in the present disclosure are merely divided by their functions. For example, multiple units or components may be combined or integrated into another system, or some features may be ignored or not performed. Furthermore, the coupling, direct coupling or communication connection among the components illustrated or discussed herein may be implemented through indirect coupling or communication connection between devices or units through some interfaces, and may be electrical, mechanical, or in other forms.

The units described as separate components may be or may not be physically separated. Components shown as units may be or may not be physical units, namely, they may be located in one place, or distributed on multiple network units. Some or all of the units may be selected to achieve the purpose of the present embodiment solution according to actual demands.

In addition, various functional units in each embodiment of the present disclosure may be integrated in one processing unit or the units may exist as separate units respectively, or two or more units may also be integrated in one unit. The integrated unit may be implemented in a form of hardware, or may also be implemented in a form of hardware and software functional units.

Those of ordinary skill in the art would appreciated that, all or part of the steps of the foregoing method embodiments may be implemented by a program instructing relevant hardware. The foregoing program may be stored in a computer readable storage medium. When the program runs, the preceding steps included in the method embodiments are performed. The foregoing storage medium includes various media capable of storing program codes, including a mobile storage device, a Read-Only Memory (ROM), a Random Access Memory (RAM), a magnetic disk, or an optical disk etc.

Or when being implemented as a software function module and sold or used as an independent product, the integrated unit in the embodiments of the present disclosure may be also stored in a computer-readable storage medium. With this in mind, the essence of the technical solution of the embodiments of the present disclosure, or the part contributing to the prior art may be embodied in a form of a software product. The computer software product is stored in a storage medium, including several instructions enabling a computer device (which may be a personal computer, a server, or a network device etc.) to execute all or part of the method in each embodiment of the present disclosure. The storage medium includes various media capable of storing program codes, including a mobile storage device, an ROM, am RAM, a magnetic disk, or an optical disk etc.

The foregoing descriptions are merely specific embodiments of the present disclosure, but not intended to limit the scope of the present disclosure. Any modification or replacement easily thought of by those skilled in the art should fall within the scope of the present disclosure. Therefore, the scope of the present disclosure should be subject to the scope of the claims.

**Claims**

1. A method for steering an attitude of a satellite carrying a Synthetic Aperture Radar, SAR, comprising:

establishing (101) a two-body model and an SAR geometric model, and acquiring, according to the two-body model and the SAR geometric model, a normal direction of a zero Doppler plane where a target point locates, wherein the SAR geometric model includes a satellite platform coordinate system, an orbit plane coordinate system and an earth-centered inertial coordinate system;

acquiring (102), according to the SAR geometric model, a yaw steering angle of the satellite when a beam direction of the satellite is vertical to the normal direction of the zero Doppler plane, and steering the attitude of the satellite according to the yaw steering angle,

wherein the step of acquiring (101), according to the two-body model and the SAR geometric model, the normal direction of the zero Doppler plane where the target point locates comprises:

acquiring, according to the two-body model, a Doppler frequency of the target point, the Doppler frequency is represented by the following Formula:

$$f_{Dop} = -\frac{2}{\lambda}\frac{\left(\vec{R}_S - \vec{R}_T\right) \bullet \left(\dot{\vec{R}}_S - \dot{\vec{R}}_T\right)}{R}$$

,

wherein, $\lambda$ is a carrier wavelength; $\vec{R}_S$ and $\vec{R}_T$ are position vectors of the satellite and the target star, respectively; $\dot{\vec{R}}_S$ and $\dot{\vec{R}}_T$ are first-order derivatives of the position vectors of the satellite and the target star, respectively; R is the distance between the satellite and the target point on the surface of the target star;

when the Doppler frequency is zero, acquiring, through coordinate transformations among the satellite platform coordinate system, the orbit plane coordinate system and the earth-centered inertial coordinate system, a normal direction of a plane where the satellite locates under the earth-centered inertial coordinate system, the normal direction satisfies the following expression:

$$\vec{n} = \left[ \omega_e \vec{R}_S'^T A_{eo}^T A_c + \dot{\vec{R}}_S'^T A_{eo}^T \right]^T ;$$

where $\omega_e$ is an angular velocity of earth rotation; $\vec{R}_S'$ and $\dot{\vec{R}}_S'$ are a position vector and a velocity vector of the satellite, respectively, $A_{eo}$ is a rotation matrix from the orbit plane coordinate system to the earth-centered inertial coordinate system,

wherein the step of acquiring (102), according to the SAR geometric model, the yaw steering angle when the beam direction of the satellite is vertical to the normal direction of the zero Doppler plane comprises:

acquiring, according to the SAR geometric model, the yaw steering angle of the satellite when a pitch angle of the satellite is zero and when the beam direction of the satellite is vertical to the normal direction of the zero Doppler plane,

wherein the step of acquiring the yaw steering angle of the satellite when the pitch angle of the satellite is zero and when the beam direction of the satellite is vertical to the normal direction of the zero Doppler plane comprises:

acquiring, through coordinate transformations among a satellite platform coordinate system, an orbit plane coordinate system and an earth-centered inertial coordinate system, a unit vector of the beam direction of the satellite under the earth-centered inertial coordinate system, the unit vector of the beam direction of the satellite under the earth-centered inertial coordinate system satisfies the following expression:

$$\vec{l'} = A_{eo} A_{os} A_{sa} \vec{l} ;$$

where $A_{eo}$ is a rotation matrix from the orbit plane coordinate system to the earth-centered inertial coordinate system, $A_{os}$ is a rotation matrix from the satellite platform coordinate system to the orbit plane coordinate system, and $A_{sa}$ is a rotation matrix satisfying the following expression:

$$A_{sa} = \begin{bmatrix} 1 & 0 & 0 \\ 0 & \cos\theta_y & -\sin\theta_y \\ 0 & \sin\theta_y & \cos\theta_y \end{bmatrix} \begin{bmatrix} \cos\theta_p & -\sin\theta_p & 0 \\ \sin\theta_p & \cos\theta_p & 0 \\ 0 & 0 & 1 \end{bmatrix} ;$$

where $\theta_y$ and $\theta_p$ are the yaw steering angle and the pitch angle, respectively;

when the beam direction of the satellite is vertical to the normal direction of the zero Doppler plane, the unit vector of the beam direction of the satellite and a normal vector of the zero Doppler plane satisfy the following expression:

$$\vec{n} \bullet \vec{l'} = 0 ;$$

where $\vec{n}$ is the normal vector of the zero Doppler plane and $\vec{l}$ is a beam direction vector;
when the pitch angle $\theta_p$ is zero, acquiring the yaw steering angle $\theta_y$ of the satellite, and steering the attitude of the satellite according to the yaw steering angle $\theta_y$,
wherein the yaw steering angle $\theta_y$ satisfies the following Formula:

$$\theta_y = \sin^{-1}(\varepsilon \tan\theta_{po} \cot\gamma) + \theta_{yo} ,$$

wherein, $\varepsilon$ is a left or right visual identifier, wherein when the radar antenna is in right visibility, $\varepsilon$=-1 and when the radar antenna is in left visibility, $\varepsilon$ = + 1, $\gamma$ is a incidence angle, and $\theta_{yo}$ and $\theta_{po}$ respectively satisfy the following Formulas:

$$\theta_{yo} = \tan^{-1}\left(\frac{k_1 \sin i \cos(\omega + f)}{k_2(1 + e\cos f) - k_1\cos i}\right)$$

$$\theta_{po} = k \tan^{-1}\left(\frac{ek_2 \sin f}{\sqrt{[k_1\sin i\cos(\omega+f)]^2 + [k_2(1+e\cos f)-k_1\cos i]^2}}\right)$$

Wherein $k_1$, $k_2$ and $k$ respectively satisfy the following Formulas:

$$k_1 = \omega_e \frac{a(1-e^2)}{1+e\cos f}$$

$$k_2 = \sqrt{\frac{\mu}{a(1-e^2)}}$$

$$k = \begin{cases} -1 & k_2(1+e\cos f)-k_1\cos i \geq 0 \\ 1 & k_2(1+e\cos f)-k_1\cos i < 0 \end{cases}$$

wherein, $\omega_e$ is the angular velocity of earth rotation; $a$ is an orbit semi-major axis under the orbit plane coordinate system; $e$ is an orbit eccentricity under the orbit plane coordinate system; $f$ is a true mesial angle, $\mu$ is a gravitational attraction constant; and $i$ is an orbit inclination under the orbit plane coordinate system.

2. A method for steering an attitude of a satellite carrying a Synthetic Aperture Radar, SAR, comprising:

establishing (101) a two-body model and an SAR geometric model, and acquiring, according to the two-body model and the SAR geometric model, a normal direction of a zero Doppler plane where a target point locates, wherein the SAR geometric model includes a satellite platform coordinate system, an orbit plane coordinate system and an earth-centered inertial coordinate system;
acquiring (102), according to the SAR geometric model, a yaw steering angle of the satellite when a beam direction of the satellite is vertical to the normal direction of the zero Doppler plane, and steering the attitude of the satellite according to the yaw steering angle,
wherein the step of acquiring (101), according to the two-body model and the SAR geometric model, the normal direction of the zero Doppler plane where the target point locates comprises:

acquiring, according to the two-body model, a Doppler frequency of the target point, the Doppler frequency is represented by the following Formula:

$$f_{Dop} = -\frac{2}{\lambda}\frac{(\vec{R}_S - \vec{R}_T)\cdot(\dot{\vec{R}}_S - \dot{\vec{R}}_T)}{R}$$
,

wherein, $\lambda$ is a carrier wavelength; $\overline{R}_S$ and $\overline{R}_T$ are position vectors of the satellite and the target star, respectively; $\dot{\overline{R}}_S$ and $\dot{\overline{R}}_T$ are first-order derivatives of the position vectors of the satellite and the target star, respectively; R is the distance between the satellite and the target point on the surface of the target star;

when the Doppler frequency is zero, acquiring, through coordinate transformations among the satellite platform coordinate system, the orbit plane coordinate system and the earth-centered inertial coordinate system, a normal direction of a plane where the satellite locates under the earth-centered inertial coordinate system, the normal direction satisfies the following expression:

$$\vec{n} = \left[ \omega_e \vec{R}_S'^T A_{eo}^T A_c + \dot{\vec{R}}_S'^T A_{eo}^T \right]^T ;$$

where $\omega_e$ is an angular velocity of earth rotation; $\vec{R}_S'$ and $\dot{\vec{R}}_S'$ are a position vector and a velocity vector of the satellite, respectively, $A_{eo}$ is a rotation matrix from the orbit plane coordinate system to the earth-centered inertial coordinate system,
wherein the step of acquiring (102), according to the SAR geometric model, the yaw steering angle when the beam direction of the satellite is vertical to the normal direction of the zero Doppler plane comprises:

acquiring the yaw steering angle of the satellite when the pitch angle of the satellite is a preset angle and the beam direction of the satellite is vertical to the normal direction of the zero Doppler plane,

wherein the step of acquiring the yaw steering angle of the satellite when the pitch angle is a preset angle, and the beam direction of the satellite is vertical to the normal direction of the zero Doppler plane comprises:

acquiring, through coordinate transformations among a satellite platform coordinate system, an orbit plane coordinate system and an earth-centered inertial coordinate system, a unit vector of the beam direction of the satellite under the earth-centered inertial coordinate system, the unit vector of the beam direction of the satellite under the earth-centered inertial coordinate system satisfies the following expression:

$$\vec{l}' = A_{eo} A_{os} A_{sa} \vec{l} ;$$

where $A_{eo}$ is a rotation matrix from the orbit plane coordinate system to the earth-centered inertial coordinate system, $A_{os}$ is a rotation matrix from the satellite platform coordinate system to the orbit plane coordinate system, and $A_{sa}$ is a rotation matrix satisfying the following expression:

$$A_{sa} = \begin{bmatrix} 1 & 0 & 0 \\ 0 & \cos\theta_y & -\sin\theta_y \\ 0 & \sin\theta_y & \cos\theta_y \end{bmatrix} \begin{bmatrix} \cos\theta_p & -\sin\theta_p & 0 \\ \sin\theta_p & \cos\theta_p & 0 \\ 0 & 0 & 1 \end{bmatrix} ;$$

where $\theta_y$ and $\theta_p$ are the yaw steering angle and the pitch angle, respectively; when the beam direction of the satellite is vertical to the normal direction of the zero Doppler plane, the unit vector of the beam direction of the satellite and a normal vector of the zero Doppler plane satisfy the following expression:

$$\vec{n} \cdot \vec{l}' = 0 ;$$

where $\bar{n}$ is the normal vector of the zero Doppler plane and $\vec{l}$ is a beam direction vector;

when the pitch angle $\theta_p$ is a preset angle, acquiring the yaw steering angle $\theta_y$ of the satellite, and steering the attitude of the satellite according to the yaw steering angle $\theta_y$,
wherein the yaw steering angle $\theta_y$ satisfies the following Formula:

$$\theta_y = \sin^{-1}\left[\frac{\varepsilon \tan\theta_{po} \cot\gamma \cos\theta_p}{\sqrt{1+\sin^2\theta_p \cot^2\gamma}}\right] + \theta_{yo} - \theta$$ ,

wherein, $\varepsilon$ is a left or right visual identifier, wherein when the radar antenna is in right visibility, $\varepsilon = -1$ and when the radar antenna is in left visibility, $\varepsilon = +1$, $\gamma$ is a incidence angle, $\theta$ satisfies the following Formula: $\theta = \tan^{-1}(\varepsilon \sin\theta_p \cot\gamma)$, and $\theta_{yo}$ and $\theta_{po}$ respectively satisfy the following Formulas:

$$\theta_{yo} = \tan^{-1}\left(\frac{k_1 \sin i \cos(\omega+f)}{k_2(1+e\cos f) - k_1\cos i}\right)$$

$$\theta_{po} = k\tan^{-1}\left(\frac{ek_2 \sin f}{\sqrt{[k_1 \sin i \cos(\omega+f)]^2 + [k_2(1+e\cos f) - k_1\cos i]^2}}\right)$$

Wherein $k_1$, $k_2$ and $k$ respectively satisfy the following Formulas:

$$k_1 = \omega_e \frac{a(1-e^2)}{1+e\cos f}$$

$$k_2 = \sqrt{\frac{\mu}{a(1-e^2)}}$$

$$k = \begin{cases} -1 & k_2(1+e\cos f) - k_1\cos i \geq 0 \\ 1 & k_2(1+e\cos f) - k_1\cos i < 0 \end{cases}$$

wherein, $\omega_e$ is the angular velocity of earth rotation; $a$ is an orbit semi-major axis under the orbit plane coordinate system; $e$ is an orbit eccentricity under the orbit plane coordinate system; $f$ is a true mesial angle, $\mu$ is a gravitational attraction constant; and $i$ is an orbit inclination under the orbit plane coordinate system.

3. A device for steering an attitude of a satellite carrying a Synthetic Aperture Radar, SAR, wherein the device comprises: a model establishing unit (21), a first acquiring unit (22), a second acquiring unit (23) and an attitude steering unit (24), wherein
the model establishing unit (21) is configured to establish a two-body model and an SAR geometric model, wherein the SAR geometric model includes a satellite platform coordinate system, an orbit plane coordinate system and an earth-centered inertial coordinate system;
the first acquiring unit (22) is configured to acquire, according to the two-body model and the SAR geometric model, a normal direction of a zero Doppler plane where a target point locates;
the second acquiring unit (23) is configured to acquire, according to the SAR geometric model, a yaw steering angle of the satellite when a beam direction of the satellite is vertical to the normal direction of the zero Doppler plane and send the yaw steering angle to the attitude steering unit;
the attitude steering unit (24) is configured to steer, according to the yaw steering angle sent by the second acquiring unit, the attitude of the satellite,
wherein the first acquiring unit (22) is configured to acquire, according to the two-body model, a Doppler frequency of the target point, the Doppler frequency is represented by the following Formula:

$$f_{Dop} = -\frac{2}{\lambda} \frac{\left(\vec{R}_s - \vec{R}_T\right) \bullet \left(\dot{\vec{R}}_s - \dot{\vec{R}}_T\right)}{R}$$

,

wherein, $\lambda$ is a carrier wavelength; $\vec{R}_S$ and $\vec{R}_T$ are position vectors of the satellite and the target star, respectively; $\dot{\vec{R}}_S$ and $\dot{\vec{R}}_T$ are first-order derivatives of the position vectors of the satellite and the target star, respectively; R is the distance between the satellite and the target point on the surface of the target star;

when the Doppler frequency is zero, acquire, through coordinate transformations among the satellite platform coordinate system, the orbit plane coordinate system and the earth-centered inertial coordinate system, a normal direction of a plane where the satellite locates under the earth-centered inertial coordinate system; the normal direction satisfies the following expression:

$$\vec{n} = \left[ \omega_e \vec{R}'^T_S A^T_{eo} A_c + \dot{\vec{R}}'^T_S A^T_{eo} \right]^T$$

;

where $\omega_e$ is an angular velocity of earth rotation; $\vec{R}'_S$ and $\dot{\vec{R}}'_S$ are a position vector and a velocity vector of the satellite, respectively, $A_{eo}$ is a rotation matrix from the orbit plane coordinate system to the earth-centered inertial coordinate system,

wherein the second acquiring unit (23) is configured to acquire, according to the SAR geometric model, the yaw steering angle of the satellite when a pitch angle of the satellite is zero and when the beam direction of the satellite is vertical to the normal direction of the zero Doppler plane,

wherein the second acquiring unit (23) is configured to acquire, through coordinate transformations among a satellite platform coordinate system, an orbit plane coordinate system and an earth-centered inertial coordinate system, a unit vector of the beam direction of the satellite under the earth-centered inertial coordinate system, the unit vector of the beam direction of the satellite under the earth-centered inertial coordinate system satisfies the following expression:

$$\vec{l}' = A_{eo} A_{os} A_{sa} \vec{l}$$

;

where $A_{eo}$ is a rotation matrix from the orbit plane coordinate system to the earth-centered inertial coordinate system, $A_{os}$ is a rotation matrix from the satellite platform coordinate system to the orbit plane coordinate system; and $A_{sa}$ is a rotation matrix satisfying the following expression:

$$A_{sa} = \begin{bmatrix} 1 & 0 & 0 \\ 0 & \cos\theta_y & -\sin\theta_y \\ 0 & \sin\theta_y & \cos\theta_y \end{bmatrix} \begin{bmatrix} \cos\theta_p & -\sin\theta_p & 0 \\ \sin\theta_p & \cos\theta_p & 0 \\ 0 & 0 & 1 \end{bmatrix}$$

;

where $\theta_y$ and $\theta_p$ are the yaw steering angle and the pitch angle, respectively; when the beam direction of the satellite is vertical to the normal direction of the zero Doppler plane, the unit vector of the beam direction of the satellite and a normal vector of the zero Doppler plane satisfy the following expression:

$$\vec{n} \bullet \vec{l}' = 0$$

;

where $\vec{n}$ is the normal vector of the zero Doppler plane and $\vec{l}'$ is a beam direction vector;

when the pitch angle $\theta_p$ is zero, acquire the yaw steering angle $\theta_y$ of the satellite, and steer the attitude of the satellite according to the yaw steering angle $\theta_y$,

wherein the yaw steering angle $\theta_y$ satisfies the following Formula:

$$\theta_y = \sin^{-1}(\varepsilon \tan \theta_{po} \cot \gamma) + \theta_{yo} \,,$$

wherein, $\varepsilon$ is a left or right visual identifier, wherein when the radar antenna is in right visibility, $\varepsilon = -1$ and when the radar antenna is in left visibility, $\varepsilon = +1$, $\gamma$ is a incidence angle, $\theta$ satisfies the following Formula: $\theta = \tan^{-1}(\varepsilon \sin \theta_p \cot \gamma)$, and $\theta_{yo}$ and $\theta_{po}$ respectively satisfy the following Formulas:

$$\theta_{yo} = \tan^{-1}(\frac{k_1 \sin i \cos(\omega + f)}{k_2(1 + e \cos f) - k_1 \cos i})$$

$$\theta_{po} = k \tan^{-1}\left( \frac{ek_2 \sin f}{\sqrt{\left[k_1 \sin i \cos(\omega + f)\right]^2 + \left[k_2(1 + e \cos f) - k_1 \cos i\right]^2}} \right)$$

Wherein $k_1$, $k_2$ and $k$ respectively satisfy the following Formulas:

$$k_1 = \omega_e \frac{a(1 - e^2)}{1 + e \cos f}$$

$$k_2 = \sqrt{\frac{\mu}{a(1 - e^2)}}$$

$$k = \begin{cases} -1 & k_2(1 + e \cos f) - k_1 \cos i \geq 0 \\ 1 & k_2(1 + e \cos f) - k_1 \cos i < 0 \end{cases}$$

wherein, $\omega_e$ is the angular velocity of earth rotation; $a$ is an orbit semi-major axis under the orbit plane coordinate system; $e$ is an orbit eccentricity under the orbit plane coordinate system; $f$ is a true mesial angle, $\mu$ is a gravitational attraction constant; and $i$ is an orbit inclination under the orbit plane coordinate system.

4. A device for steering an attitude of a satellite carrying a Synthetic Aperture Radar, SAR, wherein the device comprises: a model establishing unit (21), a first acquiring unit (22), a second acquiring unit (23) and an attitude steering unit (24), wherein
the model establishing unit (21) is configured to establish a two-body model and an SAR geometric model, wherein the SAR geometric model includes a satellite platform coordinate system, an orbit plane coordinate system and an earth-centered inertial coordinate system;
the first acquiring unit (22) is configured to acquire, according to the two-body model and the SAR geometric model, a normal direction of a zero Doppler plane where a target point locates;
the second acquiring unit (23) is configured to acquire, according to the SAR geometric model, a yaw steering angle of the satellite when a beam direction of the satellite is vertical to the normal direction of the zero Doppler plane and send the yaw steering angle to the attitude steering unit;
the attitude steering unit (24) is configured to steer, according to the yaw steering angle sent by the second acquiring unit, the attitude of the satellite,
wherein the first acquiring unit (22) is configured to acquire, according to the two-body model, a Doppler frequency of the target point, the Doppler frequency is represented by the following Formula:

$$f_{Dop} = -\frac{2}{\lambda}\frac{\left(\vec{R}_S - \vec{R}_T\right)\bullet\left(\dot{\vec{R}}_S - \dot{\vec{R}}_T\right)}{R}$$

,

wherein, $\lambda$ is a carrier wavelength; $\vec{R}_S$ and $\vec{R}_T$ are position vectors of the satellite and the target star, respectively; $\dot{R}_S$ and $\dot{R}_T$ are first-order derivatives of the position vectors of the satellite and the target star, respectively; R is the distance between the satellite and the target point on the surface of the target star;

when the Doppler frequency is zero, acquire, through coordinate transformations among the satellite platform coordinate system, the orbit plane coordinate system and the earth-centered inertial coordinate system, a normal direction of a plane where the satellite locates under the earth-centered inertial coordinate system; the normal direction satisfies the following expression:

$$\vec{n} = \left[ \omega_e \vec{R}_S'^T A_{eo}^T A_c + \dot{\vec{R}}_S'^T A_{eo}^T \right]^T$$

;

where $\omega_e$ is an angular velocity of earth rotation; $\vec{R}'_S$ and $\dot{\vec{R}}'_S$ are a position vector and a velocity vector of the satellite, respectively, $A_{eo}$ is a rotation matrix from the orbit plane coordinate system to the earth-centered inertial coordinate system,

wherein the second acquiring unit (23) is configured to acquire the yaw steering angle of the satellite when the pitch angle of the satellite is a preset angle and the beam direction of the satellite is vertical to the normal direction of the zero Doppler plane,

wherein the second acquiring unit (23) is configured to acquire, through coordinate transformations among a satellite platform coordinate system, an orbit plane coordinate system and an earth-centered inertial coordinate system, a unit vector of the beam direction of the satellite under the earth-centered inertial coordinate system, the unit vector of the beam direction of the satellite under the earth-centered inertial coordinate system satisfies the following expression:

$$\vec{l}' = A_{eo} A_{os} A_{sa} \vec{l}$$

;

where $A_{eo}$ is a rotation matrix from the orbit plane coordinate system to the earth-centered inertial coordinate system, $A_{os}$ is a rotation matrix from the satellite platform coordinate system to the orbit plane coordinate system; and $A_{sa}$ is a rotation matrix satisfying the following expression:

$$A_{sa} = \begin{bmatrix} 1 & 0 & 0 \\ 0 & \cos\theta_y & -\sin\theta_y \\ 0 & \sin\theta_y & \cos\theta_y \end{bmatrix} \begin{bmatrix} \cos\theta_p & -\sin\theta_p & 0 \\ \sin\theta_p & \cos\theta_p & 0 \\ 0 & 0 & 1 \end{bmatrix}$$

;

where $\theta_y$ and $\theta_p$ are the yaw steering angle and the pitch angle, respectively;
when the beam direction of the satellite is vertical to the normal direction of the zero Doppler plane, the unit vector of the beam direction of the satellite and a normal vector of the zero Doppler plane satisfy the following expression:

$$\vec{n}\bullet\vec{l}' = 0$$

; ;

where $\vec{n}$ is the normal vector of the zero Doppler plane and $\vec{l'}$ is a beam direction vector;

when the pitch angle $\theta_p$ is a preset angle, acquire the yaw steering angle $\theta_y$ of the satellite, and steering the attitude of the satellite according to the yaw steering angle $\theta_y$,

wherein the yaw steering angle $\theta_y$ satisfies the following Formula:

$$\theta_y = \sin^{-1}\left[\frac{\varepsilon \tan\theta_{po}\cot\gamma\cos\theta_p}{\sqrt{1+\sin^2\theta_p\cot^2\gamma}}\right] + \theta_{yo} - \theta,$$

wherein, $\varepsilon$ is a left or right visual identifier, wherein when the radar antenna is in right visibility, $\varepsilon = -1$ and when the radar antenna is in left visibility, $\varepsilon = +1$, $\gamma$ is a incidence angle, $\theta$ satisfies the following Formula: $\theta = \tan^{-1}(\varepsilon \sin\theta_p \cot\gamma)$, and $\theta_{yo}$ and $\theta_{po}$ respectively satisfy the following Formulas:

$$\theta_{yo} = \tan^{-1}\left(\frac{k_1\sin i\cos(\omega+f)}{k_2(1+e\cos f)-k_1\cos i}\right)$$

$$\theta_{po} = k\tan^{-1}\left(\frac{ek_2\sin f}{\sqrt{\left[k_1\sin i\cos(\omega+f)\right]^2+\left[k_2(1+e\cos f)-k_1\cos i\right]^2}}\right)$$

Wherein $k_1$, $k_2$ and $k$ respectively satisfy the following Formulas:

$$k_1 = \omega_e\frac{a(1-e^2)}{1+e\cos f}$$

$$k_2 = \sqrt{\frac{\mu}{a(1-e^2)}}$$

$$k = \begin{cases} -1 & k_2(1+e\cos f)-k_1\cos i \geq 0 \\ 1 & k_2(1+e\cos f)-k_1\cos i < 0 \end{cases}$$

wherein, $\omega_e$ is the angular velocity of earth rotation; $a$ is an orbit semi-major axis under the orbit plane coordinate system; $e$ is an orbit eccentricity under the orbit plane coordinate system; $f$ is a true mesial angle, $\mu$ is a gravitational attraction constant; and $i$ is an orbit inclination under the orbit plane coordinate system.

**Patentansprüche**

1. Verfahren zur Steuerung einer Lage eines Satelliten mit einem Radar mit synthetischer Apertur, SAR, wobei das Verfahren umfasst:

Aufbauen (101) eines Zweikörpermodells und eines geometrischen SAR-Modells und gemäß dem Zweikörpermodell und dem geometrischen SAR-Modell Erfassen einer Normalenrichtung einer Null-Dopplerebene, wo ein Zielpunkt liegt, wobei das geometrische SAR-Modell ein Koordinatensystem einer Satellitenplattform, ein Koordinatensystem einer Orbitebene und ein erdgebundenes Inertial-Koordinatensystem enthält;

gemäß dem geometrischen SAR-Modell Erfassen (102) eines Giersteuerungswinkels des Satelliten, wenn eine Strahlrichtung des Satelliten vertikal zu der Normalenrichtung der Null-Dopplerebene ist, und Steuern der Lage des Satelliten gemäß dem Giersteuerungswinkel,

wobei der Schritt des Erfassens (101) der Normalenrichtung der Null-Dopplerebene, wo ein Zielpunkt liegt, gemäß dem Zweikörpermodell und dem geometrischen SAR-Modell umfasst:

gemäß dem Zweikörpermodell Erfassen einer Dopplerfrequenz des Zielpunkts, wobei die Dopplerfrequenz durch die folgende Formel dargestellt wird:

$$f_{Dop} = -\frac{2}{\lambda} \frac{\left(\vec{R}_S - \vec{R}_T\right) \bullet \left(\dot{\vec{R}}_S - \dot{\vec{R}}_T\right)}{R}$$

wobei λ eine Trägerwellenlänge ist; $\vec{R}_S$ und $\vec{R}_T$ Positionsvektoren des Satelliten bzw. des Zielsterns sind; $\dot{\vec{R}}_S$

und $\dot{\vec{R}}_T$ die ersten Ableitungen der Positionsvektoren des Satelliten bzw. des Zielsterns sind; R die Entfernung zwischen dem Satelliten und dem Zielpunkt auf der Oberfläche des Zielsterns ist;

wenn die Dopplerfrequenz Null ist, durch Koordinatentransformationen unter dem Koordinatensystem der Satellitenplattform Erfassen des Koordinatensystems der Orbitebene und des erdgebundenen Inertial-Koordinatensystems, einer Normalenrichtung einer Ebene, in der der Satellit unter dem erdgebundenen Inertial-Koordinatensystem angeordnet ist, wobei die Normalenrichtung dem folgenden Ausdruck genügt:

$$\vec{n} = \left[ \omega_e \vec{R}_S'^T A_{eo}^T A_c + \dot{\vec{R}}_S'^T A_{eo}^T \right]^T ;$$

wobei $\omega_e$ eine Winkelgeschwindigkeit der Erdrotation ist; $\vec{R'}_S$ und $\dot{\vec{R'}}_S$ ein Positionsvektor bzw. ein Geschwindigkeitsvektor des Satelliten sind, $A_{eo}$ eine Rotationsmatrix von dem Koordinatensystem der Orbitebene zu dem erdgebundenen Inertial-Koordinatensystem ist,

wobei gemäß dem geometrischen SAR-Modell der Schritt des Erfassens (102) des Giersteuerungswinkels dann, wenn eine Strahlrichtung des Satelliten vertikal zu der Normalenrichtung der Null-Dopplerebene ist, umfasst:

gemäß dem geometrischen SAR-Modell Erfassen des Giersteuerungswinkels des Satelliten, wenn ein Nickwinkel des Satelliten Null ist und wenn die Strahlrichtung des Satelliten vertikal zu der Normalenrichtung der Null-Dopplerebene ist,

wobei der Schritt des Erfassens des Giersteuerungswinkels des Satelliten, wenn der Nickwinkel des Satelliten Null ist und wenn die Strahlrichtung des Satelliten vertikal zu der Normalenrichtung der Null-Dopplerebene ist, umfasst:

durch Koordinatentransformationen unter einem Koordinatensystem der Satellitenplattform Erfassen eines Koordinatensystems der Orbitebene und eines erdgebundenen Inertial-Koordinatensystems, eines Einheitsvektors der Strahlrichtung des Satelliten unter dem erdgebundenen Inertial-Koordinatensystem,

wobei der Einheitsvektor der Strahlrichtung des Satelliten unter dem erdgebundenen Inertial-Koordinatensystem dem folgenden Ausdruck genügt:

$$\vec{l'} = A_{eo} A_{os} A_{sa} \vec{l} \; ;$$

wobei $A_{eo}$ eine Rotationsmatrix von dem Koordinatensystem der Orbitebene zu dem erdgebundenen Inertial-Koordinatensystem ist, $A_{os}$ eine Rotationsmatrix von dem Koordinatensystem der Satellitenplattform zu dem Koordinatensystem der Orbitebene ist, und $A_{sa}$ eine Rotationsmatrix ist, die dem folgenden Ausdruck genügt:

$$A_{sa} = \begin{bmatrix} 1 & 0 & 0 \\ 0 & \cos\theta_y & -\sin\theta_y \\ 0 & \sin\theta_y & \cos\theta_y \end{bmatrix} \begin{bmatrix} \cos\theta_p & -\sin\theta_p & 0 \\ \sin\theta_p & \cos\theta_p & 0 \\ 0 & 0 & 1 \end{bmatrix} \; ;$$

wobei $\theta_Y$ und $\theta_P$ der Giersteuerungswinkel bzw. der Nickwinkel sind;
wenn die Strahlrichtung des Satelliten vertikal zu der Normalenrichtung der Null-Dopplerebene ist, dann genügen der Einheitsvektor der Strahlrichtung des Satelliten und ein Normalenvektor der Null-Dopplerebene dem folgenden Ausdruck:

$$\vec{n} \bullet \vec{l'} = 0 \; ;$$

wobei $\vec{n}$ der Normalenvektor der Null-Dopplerebene und $\vec{l'}$ ein Richtungsvektor des Strahls ist;
wenn der Nickwinkel $\theta_p$ Null ist, dann Erfassen des Giersteuerungswinkels $\theta_y$ des Satelliten und Steuern der Lage des Satelliten gemäß dem Giersteuerungswinkel $\theta_y$,
wobei der Giersteuerungswinkel $\theta_y$ der folgenden Formel genügt:

$$\theta_y = \sin^{-1}(\varepsilon \tan\theta_{po} \cot\gamma) + \theta_{yo} \; ,$$

wobei $\varepsilon$ ein linker oder rechter visueller Identifizierer ist, wobei dann, wenn die Radarantenne im rechten Sichtbereich ist, $\varepsilon = -1$ ist, und dann, wenn die Radarantenne im linken Sichtbereich ist, $\varepsilon = +1$ ist, wobei $\gamma$ ein Einfallswinkel ist und wobei $\theta_{yo}$ bzw. $\theta_{po}$ den folgenden Formeln genügen:

$$\theta_{yo} = \tan^{-1}\left(\frac{k_1 \sin i \cos(\omega + f)}{k_2(1 + e\cos f) - k_1 \cos i}\right)$$

$$\theta_{po} = k \tan^{-1}\left(\frac{ek_2 \sin f}{\sqrt{[k_1 \sin i \cos(\omega + f)]^2 + [k_2(1 + e\cos f) - k_1 \cos i]^2}}\right)$$

wobei $k_1$, $k_2$ bzw. $k$ den folgenden Formeln genügen:

$$k_1 = \omega_e \frac{a(1-e^2)}{1+e\cos f}$$

$$k_2 = \sqrt{\frac{\mu}{a(1-e^2)}}$$

$$k = \begin{cases} -1 & k_2(1+e\cos f) - k_1\cos i \geq 0 \\ 1 & k_2(1+e\cos f) - k_1\cos i < 0 \end{cases}$$

wobei $\omega_e$ die Winkelgeschwindigkeit der Erdrotation ist; a eine große Halbachse unter dem Koordinatensystem der Orbitebene ist; e eine Orbitexzentrizität unter dem Koordinatensystem der Orbitebene ist; f ein wahrer mesialer Winkel ist, $\mu$ eine Anziehungskonstante der Gravitation ist; und i eine Orbitneigung unter dem Koordinatensystem der Orbitebene ist.

2. Verfahren zur Steuerung einer Lage eines Satelliten mit einem Radar mit synthetischer Apertur, SAR, wobei das Verfahren umfasst:

Aufbauen (101) eines Zweikörpermodells und eines geometrischen SAR-Modells und gemäß dem Zweikörpermodell und dem geometrischen SAR-Modell Erfassen einer Normalenrichtung einer Null-Dopplerebene, wo ein Zielpunkt liegt, wobei das geometrische SAR-Modell ein Koordinatensystem einer Satellitenplattform, ein Koordinatensystem einer Orbitebene und ein erdgebundenes Inertial-Koordinatensystem enthält;
gemäß dem geometrischen SAR-Modell Erfassen (102) eines Giersteuerungswinkels des Satelliten, wenn eine Strahlrichtung des Satelliten vertikal zu der Normalenrichtung der Null-Dopplerebene ist, und Steuern der Lage des Satelliten gemäß dem Giersteuerungswinkel,
wobei der Schritt des Erfassens (101) der Normalenrichtung der Null-Dopplerebene, wo ein Zielpunkt liegt, gemäß dem Zweikörpermodell und dem geometrischen SAR-Modell umfasst:

gemäß dem Zweikörpermodell Erfassen einer Dopplerfrequenz des Zielpunkts, wobei die Dopplerfrequenz durch die folgende Formel dargestellt wird:

$$f_{Dop} = -\frac{2}{\lambda} \frac{\left(\vec{R}_S - \vec{R}_T\right) \cdot \left(\dot{\vec{R}}_S - \dot{\vec{R}}_T\right)}{R}$$

wobei $\lambda$ eine Trägerwellenlänge ist; $\vec{R_S}$ und $\vec{R_T}$ Positionsvektoren des Satelliten bzw. des Zielsterns sind; $\dot{\vec{R_S}}$ und $\dot{\vec{R_T}}$ die ersten Ableitungen der Positionsvektoren des Satelliten bzw. des Zielsterns sind; R die Entfernung zwischen dem Satelliten und dem Zielpunkt auf der Oberfläche des Zielsterns ist;

wenn die Dopplerfrequenz Null ist, durch Koordinatentransformationen unter dem Koordinatensystem der Satellitenplattform Erfassen des Koordinatensystems der Orbitebene und des erdgebundenen Inertial-Koordinatensystems, einer Normalenrichtung einer Ebene, in der der Satellit unter dem erdgebundenen Inertial-Koordinatensystem angeordnet ist, wobei die Normalenrichtung dem folgenden Ausdruck genügt:

$$\vec{n} = \left[ \omega_e \vec{R}'^T_S A^T_{eo} A_c + \dot{\vec{R}}'^T_S A^T_{eo} \right]^T ;$$

wobei $\omega_e$ eine Winkelgeschwindigkeit der Erdrotation ist; $\vec{R'_S}$ und $\dot{\vec{R'_S}}$ ein Positionsvektor bzw. ein Geschwindigkeitsvektor des Satelliten sind, $A_{eo}$ eine Rotationsmatrix von dem Koordinatensystem der Orbitebene zu dem erdgebundenen Inertial-Koordinatensystem ist,
wobei gemäß dem geometrischen SAR-Modell der Schritt des Erfassens (102) des Giersteuerungswinkels dann, wenn eine Strahlrichtung des Satelliten vertikal zu der Normalenrichtung der Null-Dopplerebene ist, umfasst:

Erfassen des Giersteuerungswinkels des Satelliten, wenn der Nickwinkel des Satelliten ein vorgegebener Winkel ist und wenn die Strahlrichtung des Satelliten vertikal zu der Normalenrichtung der Null-Dopplerebene ist,

wobei der Schritt des Erfassens des Giersteuerungswinkels des Satelliten, wenn der Nickwinkel ein vorgegebener Winkel ist und wenn die Strahlrichtung des Satelliten vertikal zu der Normalenrichtung der Null-Dopplerebene ist, umfasst:

durch Koordinatentransformationen unter einem Koordinatensystem der Satellitenplattform Erfassen eines Koordinatensystems der Orbitebene und eines erdgebundenen Inertial-Koordinatensystems, eines Einheitsvektors der Strahlrichtung des Satelliten unter dem erdgebundenen Inertial-Koordinatensystem,

wobei der Einheitsvektor der Strahlrichtung des Satelliten unter dem erdgebundenen Inertial-Koordinatensystem dem folgenden Ausdruck genügt:

$$\vec{l'} = A_{eo} A_{os} A_{sa} \vec{l} ;$$

wobei $A_{eo}$ eine Rotationsmatrix von dem Koordinatensystem der Orbitebene zu dem erdgebundenen Inertial-Koordinatensystem ist, $A_{os}$ eine Rotationsmatrix von dem Koordinatensystem der Satellitenplattform zu dem Koordinatensystem der Orbitebene ist, und $A_{sa}$ eine Rotationsmatrix ist, die dem folgenden Ausdruck genügt:

$$A_{sa} = \begin{bmatrix} 1 & 0 & 0 \\ 0 & \cos\theta_y & -\sin\theta_y \\ 0 & \sin\theta_y & \cos\theta_y \end{bmatrix} \begin{bmatrix} \cos\theta_p & -\sin\theta_p & 0 \\ \sin\theta_p & \cos\theta_p & 0 \\ 0 & 0 & 1 \end{bmatrix} ;$$

wobei $\theta_y$ und $\theta_p$ der Giersteuerungswinkel bzw. der Nickwinkel sind;
wenn die Strahlrichtung des Satelliten vertikal zu der Normalenrichtung der Null-Dopplerebene ist, dann genügen der Einheitsvektor der Strahlrichtung des Satelliten und ein Normalenvektor der Null-Dopplerebene dem folgenden Ausdruck:

$$\vec{n} \cdot \vec{l'} = 0 ;$$

wobei $\vec{n}$ der Normalenvektor der Null-Dopplerebene und $\vec{l}$ ein Richtungsvektor des Strahls ist;
wenn der Nickwinkel $\theta_p$ ein vorgegebener Winkel ist, dann Erfassen des Giersteuerungswinkels $\theta_y$ des Satelliten und Steuern der Lage des Satelliten gemäß dem Giersteuerungswinkel $\theta_y$,
wobei der Giersteuerungswinkel $\theta_y$ der folgenden Formel genügt:

$$\theta_y = \sin^{-1}\left[\frac{\varepsilon \tan\theta_{po} \cot\gamma \cos\theta_p}{\sqrt{1+\sin^2\theta_p \cot^2\gamma}}\right] + \theta_{yo} - \theta$$

wobei $\varepsilon$ ein linker oder rechter visueller Identifizierer ist, wobei dann, wenn die Radarantenne im rechten Sichtbereich ist, $\varepsilon = -1$ ist, und dann, wenn die Radarantenne im linken Sichtbereich ist, $\varepsilon = +1$ ist, wobei $\gamma$ ein Einfallswinkel ist und wobei $\theta$ der folgenden Formel genügt: $\theta = \tan^{-1}(\varepsilon\sin\theta_p \cot\gamma)$, und wobei $\theta_{yo}$ bzw. $\theta_{po}$ den folgenden Formeln genügen:

$$\theta_{yo} = \tan^{-1}\left(\frac{k_1 \sin i \cos(\omega+f)}{k_2(1+e\cos f)-k_1\cos i}\right)$$

$$\theta_{po} = k\tan^{-1}\left(\frac{ek_2\sin f}{\sqrt{[k_1\sin i\cos(\omega+f)]^2+[k_2(1+e\cos f)-k_1\cos i]^2}}\right)$$

wobei $k_1$, $k_2$ bzw. $k$ den folgenden Formeln genügen:

$$k_1 = \omega_e \frac{a(1-e^2)}{1+e\cos f}$$

$$k_2 = \sqrt{\frac{\mu}{a(1-e^2)}}$$

$$k = \begin{cases} -1 & k_2(1+e\cos f)-k_1\cos i \geq 0 \\ 1 & k_2(1+e\cos f)-k_1\cos i < 0 \end{cases}$$

wobei $\omega_e$ die Winkelgeschwindigkeit der Erdrotation ist; $a$ eine große Halbachse unter dem Koordinatensystem der Orbitebene ist; $e$ eine Orbitexzentrizität unter dem Koordinatensystem der Orbitebene ist; $f$ ein wahrer mesialer Winkel ist, $\mu$ eine Anziehungskonstante der Gravitation ist; und $i$ eine Orbitneigung unter dem Koordinatensystem der Orbitebene ist.

3. Vorrichtung zur Steuerung einer Lage eines Satelliten mit einem Radar mit synthetischer Apertur, SAR, wobei die Vorrichtung umfasst: eine Modellaufbaueinheit (21), eine erste Erfassungseinheit (22), eine zweite Erfassungseinheit (23) und eine Lagesteuerungseinheit (24), wobei
die Modellaufbaueinheit (21) konfiguriert ist, um ein Zweikörpermodell und ein geometrisches SAR-Modell aufbauen, wobei das geometrische SAR-Modell ein Koordinatensystem einer Satellitenplattform, ein Koordinatensystem einer Orbitebene und ein erdgebundenes Inertial-Koordinatensystem enthält;

die erste Erfassungseinheit (22) konfiguriert ist, um gemäß dem Zweikörpermodell und dem geometrischen SAR-Modell eine Normalenrichtung einer Null-Dopplerebene, wo ein Zielpunkt liegt, zu erfassen;

die zweite Erfassungseinheit (23) konfiguriert ist, um gemäß dem geometrischen SAR-Modell einen Giersteuerungswinkel des Satelliten zu erfassen, wenn eine Strahlrichtung des Satelliten vertikal zu der Normalenrichtung der Null-Dopplerebene ist, und um den Giersteuerungswinkel an die Lagesteuerungseinheit zu senden;

die Lagesteuerungseinheit (24) konfiguriert ist, um gemäß dem Giersteuerungswinkel, der von der zweiten Erfassungseinheit gesendet wird, die Lage des Satelliten zu steuern,

wobei die erste Erfassungseinheit (22) konfiguriert ist, um gemäß dem Zweikörpermodell eine Dopplerfrequenz des Zielpunkts zu erfassen, wobei die Dopplerfrequenz durch die folgende Formel dargestellt wird:

$$f_{Dop} = -\frac{2}{\lambda} \frac{\left(\vec{R}_s - \vec{R}_T\right) \bullet \left(\dot{\vec{R}}_s - \dot{\vec{R}}_T\right)}{R}$$

wobei $\lambda$ eine Trägerwellenlänge ist; $\vec{R_S}$ und $\vec{R_T}$ Positionsvektoren des Satelliten bzw. des Zielsterns sind; $\dot{\vec{R_S}}$

und $\dot{\vec{R_T}}$ die ersten Ableitungen der Positionsvektoren des Satelliten bzw. des Zielsterns sind; R die Entfernung zwischen dem Satelliten und dem Zielpunkt auf der Oberfläche des Zielsterns ist;

wenn die Dopplerfrequenz Null ist, durch Koordinatentransformationen unter dem Koordinatensystem der Satellitenplattform Erfassen des Koordinatensystems der Orbitebene und des erdgebundenen Inertial-Koordinatensystems, einer Normalenrichtung einer Ebene, in der der Satellit unter dem erdgebundenen Inertial-Koordinatensystem angeordnet ist; wobei die Normalenrichtung dem folgenden Ausdruck genügt:

$$\vec{n} = \left[ \omega_e \vec{R}_S'^T A_{eo}^T A_c + \dot{\vec{R}}_S'^T A_{eo}^T \right]^T ;$$

wobei $\omega_e$ eine Winkelgeschwindigkeit der Erdrotation ist; $\vec{R'_S}$ und $\dot{\vec{R'_S}}$ ein Positionsvektor bzw. ein Geschwin-

digkeitsvektor des Satelliten sind, $A_{eo}$ eine Rotationsmatrix von dem Koordinatensystem der Orbitebene zu dem erdgebundenen Inertial-Koordinatensystem ist,

wobei die zweite Erfassungseinheit (23) konfiguriert ist, um gemäß dem geometrischen SAR-Modell den Giersteuerungswinkel des Satelliten zu erfassen, wenn ein Nickwinkel des Satelliten Null ist und wenn die Strahlrichtung des Satelliten vertikal zu der Normalenrichtung der Null-Dopplerebene ist,

wobei die zweite Erfassungseinheit (23) konfiguriert ist, durch Koordinatentransformationen unter einem Koordinatensystem der Satellitenplattform ein Koordinatensystem der Orbitebene und ein erdgebundenes Inertial-Koordinatensystems, einen Einheitsvektor der Strahlrichtung des Satelliten unter dem erdgebundenen Inertial-Koordinatensystem zu erfassen, wobei der Einheitsvektor der Strahlrichtung des Satelliten unter dem erdgebundenen Inertial-Koordinatensystem dem folgenden Ausdruck genügt:

$$\vec{l'} = A_{eo} A_{os} A_{sa} \vec{l} ;$$

wobei $A_{eo}$ eine Rotationsmatrix von dem Koordinatensystem der Orbitebene zu dem erdgebundenen Inertial-Koordinatensystem ist, $A_{os}$ eine Rotationsmatrix von dem Koordinatensystem der Satellitenplattform zu dem Koordinatensystem der Orbitebene ist, und $A_{sa}$ eine Rotationsmatrix ist, die dem folgenden Ausdruck genügt:

$$A_{sa} = \begin{bmatrix} 1 & 0 & 0 \\ 0 & \cos\theta_y & -\sin\theta_y \\ 0 & \sin\theta_y & \cos\theta_y \end{bmatrix} \begin{bmatrix} \cos\theta_p & -\sin\theta_p & 0 \\ \sin\theta_p & \cos\theta_p & 0 \\ 0 & 0 & 1 \end{bmatrix} ;$$

wobei $\theta_y$ und $\theta_p$ der Giersteuerungswinkel bzw. der Nickwinkel sind;

wenn die Strahlrichtung des Satelliten vertikal zu der Normalenrichtung der Null-Dopplerebene ist, dann genügen der Einheitsvektor der Strahlrichtung des Satelliten und Normalenvektor der Null-Dopplerebene dem folgenden Ausdruck:

$$\vec{n} \cdot \vec{l}' = 0 ;$$

wobei $\vec{n}$ der Normalenvektor der Null-Dopplerebene und $\vec{l}'$ ein Richtungsvektor des Strahls ist;

wenn der Nickwinkel $\theta_p$ Null ist, dann Erfassen des Giersteuerungswinkels $\theta_y$ des Satelliten und Steuern der Lage des Satelliten gemäß dem Giersteuerungswinkel $\theta_y$,

wobei der Giersteuerungswinkel $\theta_y$ der folgenden Formel genügt:

$$\theta_y = \sin^{-1}(\varepsilon \tan\theta_{po} \cot\gamma) + \theta_{yo} ,$$

wobei $\varepsilon$ ein linker oder rechter visueller Identifizierer ist, wobei dann, wenn die Radarantenne im rechten Sichtbereich ist, $\varepsilon = -1$ ist, und dann, wenn die Radarantenne im linken Sichtbereich ist, $\varepsilon = +1$ ist, wobei $\gamma$ ein Einfallswinkel ist und wobei $\theta$ der folgenden Formel genügt: $\theta = \tan^{-1}(\varepsilon \sin\theta_p \cot\gamma)$, und wobei $\theta_{yo}$ bzw. $\theta_{po}$ den folgenden Formeln genügen:

$$\theta_{yo} = \tan^{-1}(\frac{k_1 \sin i \cos(\omega + f)}{k_2(1 + e\cos f) - k_1 \cos i})$$

$$\theta_{po} = k \tan^{-1}\left(\frac{ek_2 \sin f}{\sqrt{[k_1 \sin i \cos(\omega + f)]^2 + [k_2(1 + e\cos f) - k_1 \cos i]^2}}\right)$$

wobei $k_1$, $k_2$ bzw. $k$ den folgenden Formeln genügen:

$$k_1 = \omega_e \frac{a(1 - e^2)}{1 + e\cos f}$$

$$k_2 = \sqrt{\frac{\mu}{a(1 - e^2)}}$$

$$k = \begin{cases} -1 & k_2(1 + e\cos f) - k_1\cos i \geq 0 \\ 1 & k_2(1 + e\cos f) - k_1\cos i < 0 \end{cases}$$

wobei $\omega_e$ die Winkelgeschwindigkeit der Erdrotation ist; a eine große Halbachse unter dem Koordinatensystem der Orbitebene ist; e eine Orbitexzentrizität unter dem Koordinatensystem der Orbitebene ist; f ein wahrer mesialer Winkel ist, $\mu$ eine Anziehungskonstante der Gravitation ist und i eine Orbitneigung unter dem Koordinatensystem der Orbitebene ist.

4. Vorrichtung zur Steuerung einer Lage eines Satelliten mit einem Radar mit synthetischer Apertur, SAR, wobei die Vorrichtung umfasst: eine Modellaufbaueinheit (21), eine erste Erfassungseinheit (22), eine zweite Erfassungseinheit (23) und eine Lagesteuerungseinheit (24), wobei

die Modellaufbaueinheit (21) konfiguriert ist, um ein Zweikörpermodell und ein geometrisches SAR-Modell aufbauen, wobei das geometrische SAR-Modell ein Koordinatensystem einer Satellitenplattform, ein Koordinatensystem einer Orbitebene und ein erdgebundenes Inertial-Koordinatensystem enthält;

die erste Erfassungseinheit (22) konfiguriert ist, um gemäß dem Zweikörpermodell und dem geometrischen SAR-Modell eine Normalenrichtung einer Null-Dopplerebene, wo ein Zielpunkt liegt, zu erfassen;

die zweite Erfassungseinheit (23) konfiguriert ist, um gemäß dem geometrischen SAR-Modell einen Giersteuerungswinkel des Satelliten zu erfassen, wenn eine Strahlrichtung des Satelliten vertikal zu der Normalenrichtung der Null-Dopplerebene ist, und um den Giersteuerungswinkel an die Lagesteuerungseinheit zu senden;

die Lagesteuerungseinheit (24) konfiguriert ist, um gemäß dem Giersteuerungswinkel, der von der zweiten Erfassungseinheit gesendet wird, die Lage des Satelliten zu steuern,

wobei die erste Erfassungseinheit (22) konfiguriert ist, um gemäß dem Zweikörpermodell eine Dopplerfrequenz des Zielpunkts zu erfassen, wobei die Dopplerfrequenz durch die folgende Formel dargestellt wird:

$$f_{Dop} = -\frac{2}{\lambda}\frac{\left(\vec{R}_S - \vec{R}_T\right) \bullet \left(\dot{\vec{R}}_S - \dot{\vec{R}}_T\right)}{R}$$

wobei $\lambda$ eine Trägerwellenlänge ist; $\vec{R_S}$ und $\vec{R_T}$ Positionsvektoren des Satelliten bzw. des Zielsterns sind; $\dot{\vec{R}}_S$ und $\dot{\vec{R}}_T$ die ersten Ableitungen der Positionsvektoren des Satelliten bzw. des Zielsterns sind; R die Entfernung zwischen dem Satelliten und dem Zielpunkt auf der Oberfläche des Zielsterns ist;

wenn die Dopplerfrequenz Null ist, durch Koordinatentransformationen unter dem Koordinatensystem der Satellitenplattform Erfassen des Koordinatensystems der Orbitebene und des erdgebundenen Inertial-Koordinatensystems, einer Normalenrichtung einer Ebene, in der der Satellit unter dem erdgebundenen Inertial-Koordinatensystem angeordnet ist; wobei die Normalenrichtung dem folgenden Ausdruck genügt:

$$\vec{n} = \left[ \omega_e \vec{R}_S'^T A_{eo}^T A_c + \dot{\vec{R}}_S'^T A_{eo}^T \right]^T ;$$

wobei $\omega_e$ eine Winkelgeschwindigkeit der Erdrotation ist; $\vec{R'_S}$ und $\dot{\vec{R'_S}}$ ein Positionsvektor bzw. ein Geschwindigkeitsvektor des Satelliten sind, $A_{eo}$ eine Rotationsmatrix von dem Koordinatensystem der Orbitebene zu dem erdgebundenen Inertial-Koordinatensystem ist,

wobei die zweite Erfassungseinheit (23) konfiguriert ist, den Giersteuerungswinkel des Satelliten zu erfassen, wenn der Nickwinkel des Satelliten ein vorgegebener Winkel ist und wenn die Strahlrichtung des Satelliten vertikal zu der Normalenrichtung der Null-Dopplerebene ist,

wobei die zweite Erfassungseinheit (23) konfiguriert ist, durch Koordinatentransformationen unter einem Koordinatensystem der Satellitenplattform ein Koordinatensystem der Orbitebene und ein erdgebundenes Inertial-Koordinatensystems, einen Einheitsvektor der Strahlrichtung des Satelliten unter dem erdgebundenen Inertial-Koordinatensystem zu erfassen, wobei der Einheitsvektor der Strahlrichtung des Satelliten unter dem erdgebundenen Inertial-Koordinatensystem dem folgenden Ausdruck genügt:

$$\vec{l'} = A_{eo} A_{os} A_{sa} \vec{l} ;$$

wobei $A_{eo}$ eine Rotationsmatrix von dem Koordinatensystem der Orbitebene zu dem erdgebundenen Inertial-Koordinatensystem ist, $A_{os}$ eine Rotationsmatrix von dem Koordinatensystem der Satellitenplattform zu dem Koordinatensystem der Orbitebene ist, und $A_{sa}$ eine Rotationsmatrix ist, die dem folgenden Ausdruck genügt:

$$A_{sa} = \begin{bmatrix} 1 & 0 & 0 \\ 0 & \cos\theta_y & -\sin\theta_y \\ 0 & \sin\theta_y & \cos\theta_y \end{bmatrix} \begin{bmatrix} \cos\theta_p & -\sin\theta_p & 0 \\ \sin\theta_p & \cos\theta_p & 0 \\ 0 & 0 & 1 \end{bmatrix} ;$$

wobei $\theta_y$ und $\theta_p$ der Giersteuerungswinkel bzw. der Nickwinkel sind;

wenn die Strahlrichtung des Satelliten vertikal zu der Normalenrichtung der Null-Dopplerebene ist, dann genügen der Einheitsvektor der Strahlrichtung des Satelliten und Normalenvektor der Null-Dopplerebene dem folgenden Ausdruck:

$$\vec{n} \cdot \vec{l'} = 0 ;$$

wobei $\vec{n}$ der Normalenvektor der Null-Dopplerebene und $\vec{l'}$ ein Richtungsvektor des Strahls ist;

wenn der Nickwinkel $\theta_p$ ein vorgegebener Winkel ist, dann Erfassen des Giersteuerungswinkels $\theta_y$ des Satelliten und Steuern der Lage des Satelliten gemäß dem Giersteuerungswinkel $\theta_y$,

wobei der Giersteuerungswinkel $\theta_y$ der folgenden Formel genügt:

$$\theta_y = \sin^{-1}\left[ \frac{\varepsilon \tan\theta_{po} \cot\gamma \cos\theta_p}{\sqrt{1 + \sin^2\theta_p \cot^2\gamma}} \right] + \theta_{yo} - \theta$$

wobei $\varepsilon$ ein linker oder rechter visueller Identifizierer ist, wobei dann, wenn die Radarantenne im rechten Sichtbereich ist, $\varepsilon = -1$ ist, und dann, wenn die Radarantenne im linken Sichtbereich ist, $\varepsilon = +1$ ist, wobei $\gamma$ ein Einfallswinkel ist und wobei $\theta$ der folgenden Formel genügt: $\theta = \tan^{-1}(\varepsilon\sin\theta_p \cot\gamma)$, und wobei $\theta_{yo}$ bzw. $\theta_{po}$ den folgenden Formeln genügen:

$$\theta_{yo} = \tan^{-1}\left( \frac{k_1 \sin i \cos(\omega + f)}{k_2(1 + e\cos f) - k_1 \cos i} \right)$$

$$\theta_{po} = k \tan^{-1}\left(\frac{ek_2 \sin f}{\sqrt{[k_1 \sin i \cos(\omega + f)]^2 + [k_2(1 + e \cos f) - k_1 \cos i]^2}}\right)$$

wobei $k_1$, $k_2$ bzw. k den folgenden Formeln genügen:

$$k_1 = \omega_e \frac{a(1 - e^2)}{1 + e \cos f}$$

$$k_2 = \sqrt{\frac{\mu}{a(1 - e^2)}}$$

$$k = \begin{cases} -1 & k_2(1 + e \cos f) - k_1 \cos i \geq 0 \\ 1 & k_2(1 + e \cos f) - k_1 \cos i < 0 \end{cases}$$

wobei $\omega_e$ die Winkelgeschwindigkeit der Erdrotation ist; a eine große Halbachse unter dem Koordinatensystem der Orbitebene ist; e eine Orbitexzentrizität unter dem Koordinatensystem der Orbitebene ist; f ein wahrer mesialer Winkel ist, $\mu$ eine Anziehungskonstante der Gravitation ist und i eine Orbitneigung unter dem Koordinatensystem der Orbitebene ist.

**Revendications**

1. Procédé pour réguler l'orientation d'une attitude d'un satellite transportant un radar à synthèse d'ouverture, RSO, comprenant :

l'établissement (101) d'un modèle à deux corps et d'un modèle géométrique RSO et l'acquisition, en fonction du modèle à deux corps et du modèle géométrique RSO, d'une direction normale d'un plan Doppler zéro où un point cible se situe, dans lequel le modèle géométrique RSO comprend un système de coordonnées de plateforme satellitaire, un système de coordonnées de plan orbital et un système de coordonnées inertiel centré sur la terre ;
l'acquisition (102), en fonction du modèle géométrique RSO, d'un angle de régulation d'orientation en lacet du satellite lorsqu'une direction de faisceau du satellite est verticale par rapport à la direction normale du plan Doppler zéro, et la régulation d'orientation de l'attitude du satellite en fonction de l'angle de régulation d'orientation en lacet,
dans lequel l'étape d'acquisition (101) en fonction du modèle à deux corps et du modèle géométrique RSO de la direction normale du plan Doppler zéro où se situe le point cible comprend :

l'acquisition, en fonction du modèle à deux corps, d'une fréquence Doppler du point cible, la fréquence Doppler étant représentée par la formule suivante :

$$f_{Dop} = -\frac{2}{\lambda}\frac{(\vec{R}_s - \vec{R}_T)\cdot(\dot{\vec{R}}_s - \dot{\vec{R}}_T)}{R}$$

où λ est une longueur d'onde porteuse, $\overrightarrow{R_S}$ et $\vec{R}_T$ étant respectivement des vecteurs de position du satellite et de l'étoile cible ; $\dot{R}_S$ et $\dot{R}_T$ étant respectivement des dérivées de premier ordre des vecteurs de position du satellite et l'étoile cible ; R étant la distance entre le satellite et le point cible sur la surface de l'étoile cible ;

lorsque la fréquence Doppler est de zéro, l'acquisition, grâce à des transformations de coordonnées, parmi le système de coordonnées de la plateforme satellitaire, le système de coordonnées du plan orbital et le système de coordonnées inertiel centré sur la terre, d'une direction normale d'un plan où se situe le satellite selon le système de coordonnées inertiel centré sur la terre, la direction normale satisfaisant à l'expression suivante :

$$\vec{n} = \left[ \omega_e \vec{R}_S'^T A_{eo}^T A_c + \dot{\vec{R}}_S'^T A_{eo}^T \right]^T ;$$

où $\omega_e$ est une vélocité angulaire de la rotation de la terre ; $\vec{R}_S'$ et $\dot{\vec{R}}_S'$ étant respectivement un vecteur de position et un vecteur de vélocité du satellite, $A_{eo}$ étant une matrice de rotation du système de coordonnées de plan orbital vers le système de coordonnées inertiel centré sur la terre,
dans lequel l'étape d'acquisition (102), selon le modèle géométrique RSO, de l'angle de régulation d'orientation en lacet lorsque la direction de faisceau du satellite est verticale par rapport à la direction normale du plan Doppler zéro comprend :

l'acquisition, en fonction du modèle géométrique RSO, de l'angle de régulation d'orientation en lacet du satellite lorsqu'un angle d'inclinaison du satellite est nul et lorsque la direction de faisceau du satellite est verticale à la direction normale du plan Doppler zéro,

dans lequel l'étape d'acquisition de l'angle de régulation d'orientation en lacet du satellite lorsque l'angle d'inclinaison du satellite est nul et lorsque la direction de faisceau du satellite est verticale à la direction normale du plan Doppler zéro comprend :

l'acquisition, grâce à des transformations de coordonnées, parmi un système de coordonnées de plateforme satellitaire, un système de coordonnées de plan orbital et un système de coordonnées inertiel centré sur la terre, d'un vecteur unitaire de la direction de faisceau du satellite selon le système de coordonnées inertiel centré sur la terre, le vecteur unitaire de la direction de faisceau du satellite selon le système de coordonnées inertiel centré sur la terre satisfaisant à l'expression suivante :

$$\vec{l}' = A_{eo} A_{os} A_{sa} \vec{l} ;$$

où $A_{eo}$ est une matrice de rotation du système de coordonnées de plan orbital vers le système de coordonnées inertiel centré sur la terre, $A_{os}$ étant une matrice de rotation du système de coordonnées de plateforme satellitaire vers le système de coordonnées de plan orbital, et $A_{sa}$ étant une matrice de rotation satisfaisant à l'expression suivante :

$$A_{sa} = \begin{bmatrix} 1 & 0 & 0 \\ 0 & \cos\theta_y & -\sin\theta_y \\ 0 & \sin\theta_y & \cos\theta_y \end{bmatrix} \begin{bmatrix} \cos\theta_p & -\sin\theta_p & 0 \\ \sin\theta_p & \cos\theta_p & 0 \\ 0 & 0 & 1 \end{bmatrix} ;$$

où $\theta_y$ et $\theta_p$ sont respectivement l'angle de régulation d'orientation en lacet et l'angle d'inclinaison ;

lorsque la direction de faisceau du satellite est verticale à la direction normale du plan Doppler zéro, le vecteur unitaire de la direction de faisceau du satellite et un vecteur normal du plan Doppler zéro satisfaisant à l'expression suivante :

$$\vec{n} \bullet \vec{l}' = 0 \, ;$$

où $\vec{n}$ est le vecteur normal du plan Doppler zéro et $\vec{l}'$ étant un vecteur de direction de faisceau ;

lorsque l'angle d'inclinaison $\theta_p$ est nul, l'acquisition de l'angle de régulation d'orientation en lacet $\theta_y$ du satellite, et la régulation de l'orientation de l'attitude du satellite en fonction de l'angle de régulation d'orientation en lacet $\theta_y$, dans lequel l'angle de régulation d'orientation en lacet $\theta_y$ satisfait à la formule suivante :

$$\theta_y = \sin^{-1}(\varepsilon \tan \theta_{po} \cot \gamma) + \theta_{yo} \, ,$$

dans lequel $\varepsilon$ est un identificateur visuel de droite ou de gauche, dans lequel, lorsque l'antenne radar est en visibilité de droite $\varepsilon$ = -1, et lorsque l'antenne radar est en visibilité de gauche, $\varepsilon$ = +1, est $\gamma$ étant un angle d'incidence et $\theta_{yo}$ et $\theta_{po}$ satisfaisant respectivement aux formules suivantes :

$$\theta_{yo} = \tan^{-1}\left(\frac{k_1 \sin i \cos(\omega + f)}{k_2(1 + e \cos f) - k_1 \cos i}\right)$$

$$\theta_{po} = k \tan^{-1}\left(\frac{ek_2 \sin f}{\sqrt{[k_1 \sin i \cos(\omega + f)]^2 + [k_2(1 + e \cos f) - k_1 \cos i]^2}}\right)$$

où $k_1$, $k_2$ et $k$ satisfont respectivement aux formules suivantes :

$$k_1 = \omega_e \frac{a(1 - e^2)}{1 + e \cos f}$$

$$k_2 = \sqrt{\frac{\mu}{a(1 - e^2)}}$$

$$k = \begin{cases} -1 & k_2(1 + e \cos f) - k_1 \cos i \geq 0 \\ 1 & k_2(1 + e \cos f) - k_1 \cos i < 0 \end{cases}$$

où $\omega_e$ est la vélocité angulaire de la rotation de la terre ; $a$ étant un demi-grand axe d'orbite selon le système de coordonnées de plan orbital ; $e$ étant une excentricité d'orbite selon le système de coordonnées de plan orbital ; $f$ étant un angle mesial véritable, $\mu$ étant une constante d'attraction gravitationnelle ; et $i$ étant une inclinaison d'orbite selon le système de coordonnées de plan orbital.

2. Procédé pour réguler l'orientation d'une attitude d'un satellite transportant un radar à synthèse d'ouverture, RSO, comprenant :

l'établissement (101) d'un modèle à deux corps et d'un modèle géométrique RSO et l'acquisition, en fonction du modèle à deux corps et du modèle géométrique RSO, d'une direction normale d'un plan Doppler zéro où un point cible se situe, dans lequel le modèle géométrique RSO comprend un système de coordonnées de plateforme satellitaire, un système de coordonnées de plan orbital et un système de coordonnées inertiel centré sur la terre ;

l'acquisition (102), en fonction du modèle géométrique RSO, d'un angle de régulation d'orientation en lacet du satellite lorsqu'une direction de faisceau du satellite est verticale par rapport à la direction normale du plan Doppler zéro, et la régulation d'orientation de l'attitude du satellite en fonction de l'angle de régulation d'orientation en lacet,

dans lequel l'étape d'acquisition (101) en fonction du modèle à deux corps et du modèle géométrique RSO de la direction normale du plan Doppler zéro où se situe le point cible comprend :

l'acquisition, en fonction du modèle à deux corps, d'une fréquence Doppler du point cible, la fréquence Doppler étant représentée par la formule suivante :

$$f_{Dop} = -\frac{2}{\lambda} \frac{\left(\vec{R}_S - \vec{R}_T\right) \bullet \left(\dot{\vec{R}}_S - \dot{\vec{R}}_T\right)}{R}$$

dans lequel $\lambda$ est une longueur d'onde porteuse, $\vec{R}'_S$ et $\vec{R}_T$ étant respectivement des vecteurs de position du satellite et de l'étoile cible ; $\dot{\vec{R}}_S$ et $\dot{\vec{R}}_T$ étant respectivement des dérivées de premier ordre des vecteurs de position du satellite et de l'étoile cible ; R étant la distance entre le satellite et le point cible sur la surface de l'étoile cible ;

lorsque la fréquence Doppler est de zéro, l'acquisition, grâce à des transformations de coordonnées, parmi le système de coordonnées de la plateforme satellitaire, le système de coordonnées de plan orbital et le système de coordonnées inertiel centré sur la terre, d'une direction normale d'un plan où se situe le satellite selon le système de coordonnées inertiel centré sur la terre, la direction normale satisfaisant à l'expression suivante :

$$\vec{n} = \left[ \omega_e \vec{R}'^T_S A^T_{eo} A_c + \dot{\vec{R}}'^T_S A^T_{eo} \right]^T ;$$

où $\omega_e$ est une vélocité angulaire de la rotation de la terre ; $\vec{R}'_S$ et $\dot{\vec{R}}'_S$ étant respectivement un vecteur de position et un vecteur de vélocité du satellite, $A_{eo}$ étant une matrice de rotation du système de coordonnées de plan orbital vers le système de coordonnées inertiel centré sur la terre,

dans lequel l'étape d'acquisition (102), selon le modèle géométrique RSO, de l'angle de régulation d'orientation en lacet lorsque la direction de faisceau du satellite est verticale à la direction normale du plan Doppler zéro comprend :

l'acquisition de l'angle de régulation d'orientation en lacet du satellite lorsque l'angle d'inclinaison du satellite est un angle préréglé et que la direction de faisceau du satellite est verticale par rapport à la direction normale du plan Doppler zéro,

dans lequel l'étape d'acquisition de l'angle de régulation d'orientation en lacet du satellite lorsque l'angle d'inclinaison est un angle préréglé et que la direction de faisceau du satellite est verticale par rapport à la direction normale du plan Doppler zéro comprend :

l'acquisition, grâce à des transformations de coordonnées, parmi un système de coordonnées de plateforme satellitaire, un système de coordonnées de plan orbital et un système de coordonnées inertiel centré sur la terre, d'un vecteur unitaire de la direction de faisceau du satellite selon le système de coordonnées inertiel centré sur la terre, le vecteur unitaire de la direction de faisceau du satellite selon le système de coordonnées inertiel centré sur la terre satisfaisant à l'expression suivante :

$$\vec{l'} = A_{eo} A_{os} A_{sa} \vec{l} \; ;$$

où $A_{eo}$ est une matrice de rotation du système de coordonnées du plan orbital vers le système de coordonnées inertiel centré sur la terre, $A_{os}$ étant une matrice de rotation du système de coordonnées de plateforme satellitaire vers le système de coordonnées de plan orbital, et $A_{sa}$ étant une matrice de rotation satisfaisant à l'expression suivante :

$$A_{sa} = \begin{bmatrix} 1 & 0 & 0 \\ 0 & \cos\theta_y & -\sin\theta_y \\ 0 & \sin\theta_y & \cos\theta_y \end{bmatrix} \begin{bmatrix} \cos\theta_p & -\sin\theta_p & 0 \\ \sin\theta_p & \cos\theta_p & 0 \\ 0 & 0 & 1 \end{bmatrix} ;$$

où $\theta_y$ et $\theta_p$ sont respectivement l'angle de régulation d'orientation en lacet et l'angle d'inclinaison ;

lorsque la direction de faisceau du satellite est verticale par rapport à la direction normale du plan Doppler zéro, le vecteur unitaire de la direction de faisceau du satellite et un vecteur normal du plan Doppler zéro satisfaisant à l'expression suivante :

$$\vec{n} \bullet \vec{l'} = 0 \; ;$$

où $\vec{n}$ est le vecteur normal du plan Doppler zéro et $\vec{l'}$ étant un vecteur de direction de faisceau ;

lorsque l'angle d'inclinaison $\theta_p$ est un angle préréglé, l'acquisition de l'angle de régulation d'orientation en lacet $\theta_y$ du satellite et la régulation de l'orientation de l'attitude du satellite en fonction de l'angle de régulation d'orientation en lacet $\theta_y$,

dans lequel l'angle de régulation d'orientation en lacet $\theta_y$ satisfait à la formule suivante :

$$\theta_y = \sin^{-1}\left[ \frac{\varepsilon \tan\theta_{po} \cot\gamma \cos\theta_p}{\sqrt{1 + \sin^2\theta_p \cot^2\gamma}} \right] + \theta_{yo} - \theta$$

où $\varepsilon$ est un identificateur visuel de gauche ou de droite, dans lequel, lorsque l'antenne radar est en visibilité de droite, $\varepsilon$ = -1 et lorsque l'antenne radar est en visibilité de gauche, $\varepsilon$ = +1, $\gamma$ étant un angle d'incidence, $\theta$ satisfaisant à la formule suivante : $\theta = \tan^{-1}(\varepsilon \sin\theta_p \cot\gamma)$, et $\theta_{yo}$ et $\theta_{po}$ satisfaisant respectivement aux formules suivantes :

$$\theta_{yo} = \tan^{-1}\left( \frac{k_1 \sin i \cos(\omega + f)}{k_2(1 + e\cos f) - k_1 \cos i} \right)$$

$$\theta_{po} = k \tan^{-1}\left( \frac{ek_2 \sin f}{\sqrt{[k_1 \sin i \cos(\omega + f)]^2 + [k_2(1 + e\cos f) - k_1 \cos i]^2}} \right)$$

où $k_1$, $k_2$ et $k$ satisfont respectivement aux formules suivantes :

$$k_1 = \omega_e \frac{a(1-e^2)}{1+e\cos f}$$

$$k_2 = \sqrt{\frac{\mu}{a(1-e^2)}}$$

$$k = \begin{cases} -1 & k_2(1+e\cos f) - k_1\cos i \geq 0 \\ 1 & k_2(1+e\cos f) - k_1\cos i < 0 \end{cases}$$

où $\omega_e$ est la vélocité angulaire de la rotation de la terre ; *a* étant un demi-grand axe d'orbite selon le système de coordonnées de plan orbital ; *e* étant une excentricité orbitale selon le système de coordonnées de plan orbital ; *f* étant un angle mésial véritable, $\mu$ étant une constante d'attraction gravitationnelle ; et *i* étant une inclinaison d'orbite selon le système de coordonnées du plan orbital.

3. Dispositif pour réguler l'orientation d'une attitude d'un satellite transportant un radar à synthèse d'ouverture, RSO, dans lequel le dispositif comprend :

une unité d'établissement de modèle (21), une première unité d'acquisition (22), une deuxième unité d'acquisition (23) et une unité de régulation d'orientation d'attitude (24), dans lequel
l'unité d'établissement de modèle (21) est configurée pour établir un modèle à deux corps et un modèle géométrique RSO, dans lequel le modèle géométrique RSO comprend un système de coordonnées de plateforme satellitaire, un système de coordonnées de plan orbital et un système de coordonnées inertiel centré sur la terre ;
la première unité d'acquisition (22) étant configurée pour acquérir, en fonction du modèle à deux corps et du modèle géométrique RSO, une direction normale d'un plan Doppler zéro où se situe le point cible ;
la deuxième unité d'acquisition (23) étant configurée pour acquérir, en fonction du modèle géométrique RSO, un angle de régulation d'orientation en lacet du satellite lorsqu'une direction de faisceau du satellite est verticale par rapport à la direction normale du plan Doppler zéro et envoyer l'angle de régulation d'orientation en lacet à l'unité de régulation d'orientation de l'attitude ;
l'unité de régulation d'orientation d'attitude (24) étant configurée pour réguler, en fonction de l'angle de régulation d'orientation en lacet envoyé par la deuxième unité d'acquisition, l'orientation de l'attitude du satellite,
dans lequel la première unité d'acquisition (22) est configurée pour acquérir, en fonction du modèle à deux corps, une fréquence Doppler du point cible, la fréquence Doppler étant représentée par la formule suivante :

$$f_{Dop} = -\frac{2}{\lambda} \frac{(\vec{R}_S - \vec{R}_T) \bullet (\dot{\vec{R}}_S - \dot{\vec{R}}_T)}{R}$$

où $\lambda$ est une longueur d'onde porteuse, $\vec{R}_S$ et $\vec{R}_T$ étant respectivement des vecteurs de position du satellite et de l'étoile cible; $\dot{\vec{R}}_S$ et $\dot{\vec{R}}_T$ étant respectivement des dérivées de premier ordre des vecteurs de position du satellite et de l'étoile cible ; R étant la distance entre le satellite et le point cible sur la surface de l'étoile cible ; lorsque la fréquence Doppler est de zéro, pour acquérir, par l'intermédiaire de transformations de coordonnées, parmi le système de coordonnées de la plateforme satellitaire, le système de coordonnées du plan orbital et le système de coordonnées inertiel centré sur la terre, une direction normale d'un plan où se situe le satellite selon le système de coordonnées inertiel centré sur la terre, la direction normale satisfaisant à l'expression suivante :

$$\vec{n} = \left[ \omega_e \vec{R}_S'^T A_{eo}^T A_c + \dot{\vec{R}}_S'^T A_{eo}^T \right]^T ;$$

où $\omega_e$ est une vélocité angulaire de la rotation de la terre ; $\vec{R}_S'$ et $\dot{\vec{R}}_S'$ étant respectivement un vecteur de position et un vecteur de vélocité du satellite, $A_{eo}$ étant une matrice de rotation du système de coordonnées de plan orbital vers le système de coordonnées inertiel centré sur la terre,

dans lequel la deuxième unité d'acquisition (23) est configurée pour acquérir, en fonction du modèle géométrique RSO, l'angle de régulation d'orientation en lacet du satellite lorsqu'un angle d'inclinaison du satellite est nul et lorsque la direction de faisceau du satellite est verticale par rapport à la direction normale du plan Doppler zéro, dans lequel la deuxième unité d'acquisition (23) est configurée pour acquérir, grâce à des transformations de coordonnées, parmi un système de coordonnées de plateforme satellitaire, un système de coordonnées de plan orbital et un système de coordonnées inertiel centré sur la terre, un vecteur unitaire de la direction de faisceau du satellite selon un système de coordonnées inertiel centré sur la terre, le vecteur unitaire de la direction de faisceau du satellite selon le système de coordonnées inertiel centré sur la terre satisfaisant à l'expression suivante :

$$\vec{l}' = A_{eo} A_{os} A_{sa} \vec{l} ;$$

où $A_{eo}$ est une matrice de rotation du système de coordonnées de plan orbital vers le système de A coordonnées inertiel centré sur la terre, $A_{os}$ étant une matrice de rotation du système de coordonnées de plateforme satellitaire vers le système de coordonnées de plan orbital, et $A_{sa}$ étant une matrice de rotation satisfaisant à l'expression suivante :

$$A_{sa} = \begin{bmatrix} 1 & 0 & 0 \\ 0 & \cos\theta_y & -\sin\theta_y \\ 0 & \sin\theta_y & \cos\theta_y \end{bmatrix} \begin{bmatrix} \cos\theta_p & -\sin\theta_p & 0 \\ \sin\theta_p & \cos\theta_p & 0 \\ 0 & 0 & 1 \end{bmatrix} ;$$

où $\theta_y$ et $\theta_p$ sont respectivement l'angle de régulation d'orientation en lacet et l'angle d'inclinaison ; lorsque la direction de faisceau du satellite est verticale à la direction normale du plan Doppler zéro, le vecteur unitaire de la direction de faisceau du satellite et un vecteur normal du plan Doppler zéro satisfaisant à l'expression suivante :

$$\vec{n} \bullet \vec{l}' = 0 ;$$

où $\vec{n}$ est le vecteur normal du plan Doppler zéro et $\vec{l}$ étant un vecteur de direction de faisceau ; lorsque l'angle d'inclinaison $\theta_p$ est nul, pour acquérir l'angle de régulation d'orientation en lacet $\theta_y$ du satellite et réguler l'orientation de l'attitude du satellite en fonction de l'angle de régulation d'orientation en lacet $\theta_y$, dans lequel l'angle de régulation d'orientation en lacet $\theta_y$ satisfait à la formule suivante :

$$\theta_y = \sin^{-1}(\varepsilon \tan\theta_{po} \cot\gamma) + \theta_{yo} ,$$

où $\varepsilon$ est un identificateur visuel de droite ou de gauche, dans lequel, lorsque l'antenne radar est en visibilité de droite $\varepsilon$ = -1, et lorsque l'antenne radar est en visibilité de gauche, $\varepsilon$ = +1, $\gamma$ étant un angle d'incidence, $\theta$ satisfaisant à la formule suivante : $\theta$ = tan$^{-1}$($\varepsilon$ sin $\theta_p$ cot $\gamma$) et $\theta_{po}$ satisfaisant respectivement aux formules

suivantes :

$$\theta_{yo} = \tan^{-1}\left(\frac{k_1 \sin i \cos(\omega + f)}{k_2(1 + e \cos f) - k_1 \cos i}\right)$$

$$\theta_{po} = k \tan^{-1}\left(\frac{e k_2 \sin f}{\sqrt{[k_1 \sin i \cos(\omega + f)]^2 + [k_2(1 + e \cos f) - k_1 \cos i]^2}}\right)$$

où $k_1$, $k_2$ et $k$ satisfont respectivement aux formules suivantes :

$$k_1 = \omega_e \frac{a(1 - e^2)}{1 + e \cos f}$$

$$k_2 = \sqrt{\frac{\mu}{a(1 - e^2)}}$$

$$k = \begin{cases} -1 & k_2(1 + e \cos f) - k_1 \cos i \geq 0 \\ 1 & k_2(1 + e \cos f) - k_1 \cos i < 0 \end{cases}$$

où $\omega_e$ est la vélocité angulaire de la rotation de la terre ; $a$ étant un demi-grand axe d'orbite selon le système de coordonnées du plan orbital ; $e$ étant une excentricité d'orbite selon le système de coordonnées de plan orbital, $f$ étant un angle mesial véritable, $\mu$ étant une constante d'attraction gravitationnelle ; et $i$ étant une inclinaison d'orbite selon le système de coordonnées du plan orbital.

4. Dispositif pour réguler l'orientation d'une attitude d'un satellite transportant un radar à synthèse d'ouverture, RSO, dans lequel le dispositif comprend :

une unité d'établissement de modèle (21), une première unité d'acquisition (22), une deuxième unité d'acquisition (23) et une unité de régulation d'orientation d'attitude (24), dans lequel
l'unité d'établissement de modèle (21) est configurée pour établir un modèle à deux corps et un modèle géométrique RSO, dans lequel le modèle géométrique RSO comprend un système de coordonnées de plateforme satellitaire, un système de coordonnées de plan orbital et un système de coordonnées inertiel centré sur la terre ;
la première unité d'acquisition (22) étant configurée pour acquérir, en fonction du modèle à deux corps et du modèle géométrique RSO, une direction normale d'un plan Doppler zéro où un point cible se situe ;
la deuxième unité d'acquisition (23) étant configurée pour acquérir, en fonction du modèle géométrique RSO, un angle de régulation d'orientation en lacet du satellite lorsqu'une direction de faisceau du satellite est verticale par rapport à la direction normale du plan Doppler zéro, et envoyer l'angle de régulation d'orientation en lacet à l'unité de régulation d'orientation d'attitude ;
l'unité de régulation d'orientation d'attitude (24) étant configurée pour réguler, en fonction de l'angle de régulation d'orientation en lacet envoyé par la deuxième unité d'acquisition, l'orientation de l'attitude du satellite,
dans lequel la première unité d'acquisition (22) est configurée pour acquérir, en fonction du modèle à deux corps, une fréquence Doppler du point cible, la fréquence Doppler étant représentée par la formule suivante :

$$f_{Dop} = -\frac{2}{\lambda} \frac{(\vec{R}_s - \vec{R}_T) \cdot (\dot{\vec{R}}_s - \dot{\vec{R}}_T)}{R}$$

dans lequel λ est une longueur d'onde porteuse, $\vec{R}_S$ et $\vec{R}_T$ étant respectivement des vecteurs de position du satellite et de l'étoile cible ; $\dot{\vec{R}}_S$ et $\dot{\vec{R}}_T$ étant respectivement des dérivées de premier ordre des vecteurs de position du satellite et de l'étoile cible ; R étant la distance entre le satellite et le point cible sur la surface de l'étoile cible ;

lorsque la fréquence Doppler est de zéro, pour acquérir, grâce à des transformations de coordonnées, parmi le système de coordonnées de la plateforme satellitaire, le système de coordonnées de plan orbital et le système de coordonnées inertiel centré sur la terre, une direction normale d'un plan où se situe le satellite selon le système de coordonnées inertiel centré sur la terre, la direction normale satisfaisant à l'expression suivante :

$$\vec{n} = \left[ \omega_e \vec{R}_S^{\prime T} A_{eo}^T A_c + \dot{\vec{R}}_S^{\prime T} A_{eo}^T \right]^T ;$$

où $\omega_e$ est une vélocité angulaire de la rotation de la terre ; $\vec{R}_S'$ et $\dot{\vec{R}}_S'$ étant respectivement un vecteur de position et un vecteur de vélocité du satellite, $A_{eo}$ étant une matrice de rotation du système de coordonnées de plan orbital vers le système de coordonnées inertiel centré sur la terre,

dans lequel la deuxième unité d'acquisition (23) est configurée pour acquérir l'angle de régulation d'orientation en lacet du satellite lorsque l'angle d'inclinaison du satellite est un angle préréglé et que la direction de faisceau du satellite est verticale par rapport à la direction normale du plan Doppler zéro,

dans lequel la deuxième unité d'acquisition (23) est configurée pour acquérir, grâce à des transformations de coordonnées, parmi un système de coordonnées de plateforme satellitaire, un système de coordonnées de plan orbital et un système de coordonnées inertiel centré sur la terre, un vecteur unitaire de la direction de faisceau du satellite selon le système de coordonnées inertiel centré sur la terre, le vecteur unitaire de la direction de faisceau du satellite selon le système de coordonnées inertiel centré sur la terre satisfaisant à l'expression suivante :

$$\vec{l}' = A_{eo} A_{os} A_{sa} \vec{l} ;$$

où $A_{eo}$ est une matrice de rotation du système de coordonnées de plan orbital vers le système de coordonnées inertiel centré sur la terre, $A_{os}$ étant une matrice de rotation du système de coordonnées de plateforme satellitaire vers le système de coordonnées de plan orbital, et $A_{sa}$ étant une matrice de rotation satisfaisant à l'expression suivante :

$$A_{sa} = \begin{bmatrix} 1 & 0 & 0 \\ 0 & \cos\theta_y & -\sin\theta_y \\ 0 & \sin\theta_y & \cos\theta_y \end{bmatrix} \begin{bmatrix} \cos\theta_p & -\sin\theta_p & 0 \\ \sin\theta_p & \cos\theta_p & 0 \\ 0 & 0 & 1 \end{bmatrix} ;$$

où $\theta_y$ et $\theta_p$ sont respectivement l'angle de régulation d'orientation en lacet et l'angle d'inclinaison ;

lorsque la direction de faisceau du satellite est verticale par rapport à la direction normale du plan Doppler zéro, le vecteur unitaire de la direction de faisceau du satellite et un vecteur normal du plan Doppler zéro satisfaisant à l'expression suivante :

$$\vec{n} \cdot \vec{l}' = 0 ;$$

où $\vec{n}$ est le vecteur normal du plan Doppler zéro et $\vec{l}'$ étant un vecteur de direction de faisceau ;

lorsque l'angle d'inclinaison $\theta_p$ est un angle préréglé, pour acquérir l'angle de régulation d'orientation en lacet

$\theta_y$ du satellite et réguler l'orientation de l'attitude du satellite en fonction de l'angle de régulation d'orientation en lacet $\theta_y$,

dans lequel l'angle de régulation d'orientation en lacet $\theta_y$ satisfait à la formule suivante :

$$\theta_y = \sin^{-1}\left[\frac{\varepsilon \tan \theta_{po} \cot \gamma \cos \theta_p}{\sqrt{1 + \sin^2 \theta_p \cot^2 \gamma}}\right] + \theta_{yo} - \theta \quad,$$

où $\varepsilon$ est un identificateur visuel de gauche ou de droite, dans lequel, lorsque l'antenne radar est en visibilité de droite, $\varepsilon$ **= -1** et lorsque l'antenne radar est en visibilité de gauche, $\varepsilon$ **= +1,** $\gamma$ étant un angle d'incidence, $\theta$ satisfaisant à la formule suivante : $\theta = $ **tan$^{-1}$**($\varepsilon$ **sin** $\theta_p$ **cot** $\gamma$), et $\theta_{yo}$ et $\theta_{po}$ satisfaisant respectivement aux formules suivantes :

$$\theta_{yo} = \tan^{-1}\left(\frac{k_1 \sin i \cos(\omega + f)}{k_2(1 + e \cos f) - k_1 \cos i}\right)$$

$$\theta_{po} = k \tan^{-1}\left(\frac{e k_2 \sin f}{\sqrt{[k_1 \sin i \cos(\omega + f)]^2 + [k_2(1 + e \cos f) - k_1 \cos i]^2}}\right)$$

où $k_1$, $k_2$ et $k$ satisfont respectivement aux formules suivantes :

$$k_1 = \omega_e \frac{a(1 - e^2)}{1 + e \cos f}$$

$$k_2 = \sqrt{\frac{\mu}{a(1 - e^2)}}$$

$$k = \begin{cases} -1 & k_2(1 + e \cos f) - k_1 \cos i \geq 0 \\ 1 & k_2(1 + e \cos f) - k_1 \cos i < 0 \end{cases}$$

où $\omega_e$ est la vélocité angulaire de la rotation de la terre ; $a$ étant un demi-grand axe d'orbite selon le système de coordonnées du plan orbital ; $e$ étant une excentricité orbitale selon le système de coordonnées du plan orbital ; $f$ étant un angle mésial véritable, $\mu$ étant une constante d'attraction gravitationnelle ; et $i$ étant une inclinaison d'orbite selon le système de coordonnées du plan orbital.

Fig.1

| establish a two-body model and an SAR model, and acquire, according to the two-body model and the SAR geometric model, a normal direction of a zero Doppler plane where a target point locates | 101 |

| acquire, according to the SAR geometric model, a yaw steering angle of the satellite when a beam direction of the satellite is vertical to the normal direction of the zero Doppler plane, and steer the attitude of the satellite according to the yaw steering angle | 102 |

Fig.2

Fig.3

Fig.5

Fig.6

```
          ┌─────────────┐
     ┌────│    Model    │
     │    │ establishing│
     │    │   unit 21   │
     │    └─────────────┘
     │           │
     │    ┌─────────────┐
     │    │    First    │
     │    │  acquiring  │
     │    │   unit 22   │
     │    └─────────────┘
     │           │
     │    ┌─────────────┐
     │    │   Second    │
     └────│  acquiring  │
          │   unit 23   │
          └─────────────┘
                 │
          ┌─────────────┐
          │  Attitude   │
          │steering unit│
          │     24      │
          └─────────────┘
```

# EP 2 816 371 B1

## REFERENCES CITED IN THE DESCRIPTION

**Patent documents cited in the description**

- EP 1515159 A1

**Non-patent literature cited in the description**

- **YU ZE et al.** A new satellite attitude steering approach for zero Doppler centroid. *2009 IET International Radar Conference,* 22 April 2009

- A New Method of Zero-Doppler Centroid Control in GEO SAR. **TENG LONG et al.** IEEE Geoscience and Remote Sensing Letters. IEEE Service Center, 01 May 2011, vol. 8, 512-516